# EUROPEAN PATENT APPLICATION

(11) **EP 4 510 693 A1**
(43) Date of publication of application: **19.02.2025**
(21) Application number: 23795643.8
(22) Date of filing: 28.04.2023
(51) Int. Cl.: H04W 28/02

(54) **COMMUNICATION METHOD AND APPARATUS**

(30) Priority: 29.04.2022 CN 202210475047
(71) Applicant: Huawei Technologies Co., Ltd., Shenzhen, Guangdong 518129 (CN)
(72) Inventor: DONG, Changzhao, Shenzhen, Guangdong 518129 (CN); LIU, Xianda, Shenzhen, Guangdong 518129 (CN); LIU, Kunpeng, Shenzhen, Guangdong 518129 (CN)
(74) Representative: Maiwald GmbH
(86) International application number: PCT/CN2023/091696
(87) International publication number: WO 2023/208211

(57) **Abstract**

A communication method and apparatus are provided, to improve communication reliability. The method includes: When a first index of a first signal is the same as a first index corresponding to first indication information, a terminal device may communicate the first signal based on a first spatial parameter indicated by the first indication information. The first spatial parameter may be for communicating at least two types of signals/channels. For example, the first indication information may be a unified TCI. Therefore, according to the method, in a scenario in which a spatial parameter for a signal/channel is indicated by the unified TCI, a spatial parameter used for a to-be-sent signal/channel can be accurately determined, and the communication reliability can be improved.

## Description

### CROSS-REFERENCE TO RELATED APPLICATIONS

This application claims priority to Chinese Patent Application No. 202210475047.8, filed with the China National Intellectual Property Administration on April 29, 2022 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

In a 5th generation (5th generation, 5G) mobile communication system, high-frequency communication is used. That is, data transmission is performed by using a super high frequency band (for example, a frequency band above 6 Giga Hertz (GHz)) signal. A main problem of the high-frequency communication is that signal energy sharply decreases as a transmission distance increases, and this results in a short signal transmission distance. To resolve this problem, an analog beam technology is used for the high-frequency communication. A large-scale antenna array is for weighted processing, and the signal energy is concentrated in a small range, to form a beam, so that the transmission distance is extended.

A network device may generate different beams that point to different transmission directions. In downlink data transmission, the network device may transmit data to a terminal device by using a plurality of transmission reception points (transmitter and receiver points, TRPs).

Currently, the network device is supported in indicating, by using a unified transmission configuration indication (transmission configuration indicator, TCI) (unified TCI), a spatial parameter used when UE communicates a signal/channel. However, it is difficult to accurately determine, based only on the unified TCI, the spatial parameter used for the to-be-communicated signal/channel. Consequently, communication reliability is reduced.

### SUMMARY

This application provides a communication method and apparatus, to accurately determine a spatial parameter used for a signal/channel, and improve communication reliability.

According to a first aspect, a communication method is provided. The method may be applied to a scenario in which spatial parameters for a plurality of signals/channels are indicated by TCIs, and the TCI may be referred to as a unified TCI. Specifically, the method may be implemented by a terminal device or a component in the terminal device, where the component is, for example, at least one of a processor, a transceiver, a processing module, or a transceiver module. For example, an execution body is the terminal device. The method includes: The terminal device receives first indication information, where the first indication information indicates a first spatial parameter, the first spatial parameter is for communicating a first type of signal/channel, and the first type of signal/channel includes at least two of a sounding reference signal (sounding reference signal, SRS), a channel state information downlink signal (channel state information reference signal, CSI-RS), a physical uplink control channel (physical uplink control channel, PUCCH), a physical downlink control channel (physical downlink control channel, PDCCH), a physical downlink shared channel (physical downlink shared channel, PDSCH), a physical uplink shared channel (physical uplink shared channel, PUSCH), a phase tracking signal (phase tracking reference signal, PTRS), a demodulation reference signal (demodulation reference signal, DMRS), a tracking reference signal (tracking reference signal, TRS), or a synchronization signal block (synchronization signal block, SSB). The terminal device may further communicate a first signal/channel based on the first spatial parameter, where a type of the first signal/channel is the first type, and a first index corresponding to the first signal/channel is the same as a first index corresponding to the first indication information.

According to the method shown in the first aspect, when the first index of the first signal is the same as the first index corresponding to the first indication information, the terminal device may communicate the first signal based on the first spatial parameter indicated by the first indication information. The first spatial parameter may be for communicating at least two of the SRS, the CSI-RS, the PDSCH, the PDCCH, the PUSCH, the PUCCH, the PTRS, the DMRS, the TRS, or the SSB. For example, the first indication information may be a unified TCI. Therefore, according to the method, in a scenario in which a spatial parameter for a signal/channel is indicated by the unified TCI, a spatial parameter used for a to-be-sent signal/channel can be accurately determined, and communication reliability can be improved.

In a possible implementation, the terminal device may further receive second indication information, where the second indication information indicates a second spatial parameter; and communicate a second signal/channel based on the second spatial parameter, where the second signal/channel belongs to a second type, the second type of signal/channel includes at least two of the SRS, the CSI-RS, the PDSCH, the PDCCH, the PUSCH, the PUCCH, the PTRS, the DMRS, the TRS, or the SSB, and a second index corresponding to the second signal is the same as a second index corresponding to the second indication information. It should be understood that the second indication information may be the same as the first indication information. Therefore, for the second indication information, refer to the descriptions of the first indication information in this application. Similarly, for the second spatial parameter, refer to the descriptions of the first spatial parameter in this application. For the second signal/channel, refer to the descriptions of the first signal/channel in this application. For the second type, refer to the descriptions of the first type in this application.

Based on this implementation, that both the first indication information and the second indication information are unified TCIs is used as an example. The terminal device may determine, based on the first index or the second index corresponding to the to-be-sent signal/channel, to communicate the to-be-sent signal/channel by using the first spatial parameter or the second spatial parameter, to further improve the communication reliability.

In a possible implementation, the terminal device may further receive first information, where the first information may indicate that the first indication information is applicable to the first signal/channel.

Based on this implementation, the terminal device can accurately determine the spatial parameter for the (periodic or aperiodic) SRS and/or the (periodic or aperiodic) CSI-RS based on the first indication information, to further improve the communication reliability.

In a possible implementation, the terminal device may further receive second information, where the second information indicates to obtain the first indication information. For example, the second information may indicate that a plurality of TCI states are used as a unified TCI state pool and/or active unified TCI states. The first indication information may indicate one unified TCI in the unified TCI state pool and/or the active unified TCI states. Based on this implementation, an optional range of the first indication information may be indicated by the second information, to implement flexible indication of the first indication information.

According to a second aspect, a communication method is provided. The method may be applied to a scenario in which spatial parameters for a plurality of signals/channels are indicated by TCIs, and the TCI may be referred to as a unified TCI. Specifically, the method may be implemented by a network device or a component in the network device, where the component is, for example, at least one of a processor, a transceiver, a processing module, or a transceiver module. For example, an execution body is the network device. The method includes: The network device sends first indication information, where the first indication information indicates a first spatial parameter, the first spatial parameter is for communicating a first type of signal/channel, and the first type of signal/channel includes at least two of an SRS, a CSI-RS, a PDSCH, a PDCCH, a PUSCH, a PUCCH, a PTRS, a DMRS, a TRS, or an SSB. The network device may further communicate a first signal/channel based on the first spatial parameter, where a type of the first signal/channel is the first type, and a first index corresponding to the first signal/channel is the same as a first index corresponding to the first indication information.

According to the method shown in the second aspect, when the first index of the first signal is the same as the first index corresponding to the first indication information, the network device may communicate the first signal based on the first spatial parameter indicated by the first indication information. The first spatial parameter may be for communicating at least two of the SRS, the CSI-RS, the PDSCH, the PDCCH, the PUSCH, the PUCCH, the PTRS, the DMRS, the TRS, or the SSB. For example, the first indication information may be a unified TCI. Therefore, according to the method, in a scenario in which a spatial parameter for a signal/channel is indicated by the unified TCI, a spatial parameter used for a to-be-sent signal/channel can be accurately determined, and communication reliability can be improved.

In a possible implementation, the network device may further send second indication information, where the second indication information indicates a second spatial parameter; and communicate a second signal/channel based on the second spatial parameter, where the second signal/channel belongs to a second type, the second type of signal/channel includes at least two of the SRS, the CSI-RS, the PDSCH, the PDCCH, the PUSCH, the PUCCH, the PTRS, the DMRS, the TRS, or the SSB, and a second index corresponding to the second signal/channel is the same as a second index corresponding to the second indication information.

In a possible implementation, the terminal device may further send first information, where the first information may indicate that the first indication information is applicable to the first signal/channel.

In a possible implementation, the network device may further send second information, where the second information indicates to obtain the first indication information.

For example, the second information may indicate that a plurality of TCI states are used as a unified TCI state pool and/or active unified TCI states. The first indication information may indicate one unified TCI in the unified TCI state pool and/or the active unified TCI states. Based on this implementation, an optional range of the first indication information may be indicated by the second information, to implement flexible indication of the first indication information.

In a possible implementation of the first aspect and the second aspect, application time of the first indication information is after a hybrid automatic repeat request (hybrid automatic repeat request, HARQ)-acknowledgement (acknowledgement, ACK) (HARQ-ACK) indicated by first downlink control information (downlink control information, DCI), and sending time of the first signal/channel is after the application time of the first indication information.

Based on this implementation, the terminal device and the network device can accurately determine the application time of the first indication information and/or the first spatial parameter, thereby communicating the signal/channel by using the first spatial parameter based on the correct application time of the first indication information and/or the first spatial parameter, to further improve the communication reliability.

In a possible implementation of the first aspect and the second aspect, the first spatial parameter and the second spatial parameter correspond to different TRPs.

Therefore, a solution in which the unified TCIs indicate the spatial parameters is implemented in a multi-TRP scenario, and the terminal device and the network device can accurately determine, based on the foregoing methods, spatial parameters used for to-be-communicated signals/channels between the terminal device and any TRP and between the network device and the any TRP, to further improve the communication reliability.

In a possible implementation of the first aspect and the second aspect, the first indication information is included in first DCI, a feedback mode of a HARQ-ACK indicated by the first DCI is an independent feedback, and the first type or the type of the first signal/channel includes the PUCCH.

Based on this implementation, when the first indication information is included in the first DCI, and the feedback mode of the HARQ-ACK indicated by the first DCI is the independent feedback, the first type or the type of the first signal/channel includes the PUCCH. Therefore, the terminal device and the network device can accurately determine a spatial parameter used for the PUCCH.

In a possible implementation of the first aspect and the second aspect, the first indication information is included in first DCI, and the first type includes an aperiodic SRS or an aperiodic CSI-RS.

Based on this implementation, when the first indication information is included in the first DCI, the first type or the type of the first signal/channel includes the aperiodic SRS or the aperiodic CSI-RS. Therefore, the terminal device and the network device can accurately determine a spatial parameter used for the aperiodic SRS or the aperiodic CSI-RS.

In a possible implementation of the first aspect and the second aspect, the type of the first signal and/or the first type include/includes a periodic SRS or a periodic CSI-RS, the first index corresponding to the first signal is a control resource set (control resource set, CORESET) group index (CORESET pool index), and the control resource set group index is determined based on indication information in reference signal resource information (which is also referred to as reference signal/channel resource information) corresponding to the first signal. In other words, the first index is a reference signal resource index, and a reference signal resource may be a control resource set group.

Based on this implementation, if the first signal/channel is the periodic SRS or the periodic CSI-RS, the terminal device may determine, based on the control resource set group index in the reference signal resource information of the first signal/channel, the first indication information having a same control resource set group index, and communicate the first signal/channel based on the first spatial parameter indicated by the first indication information, to further improve the communication reliability.

In a possible implementation of the first aspect and the second aspect, the first index corresponding to the first signal/channel may be the control resource set group index corresponding to the first signal/channel, and the first index corresponding to the first indication information includes a control resource set group index corresponding to the first indication information. Optionally, the control resource set group index corresponding to the first signal/channel may be included in the reference signal resource information of the first signal/channel.

It should be understood that the reference signal resource information in this application may indicate or be for configuring a reference signal/channel. For example, the reference signal resource information is configuration information of a periodic SRS or a periodic CSI-RS in a radio resource control (radio resource control, RRC) message or a media access control (media access control, MAC) control element (control element, CE) (MAC CE). The configuration information may include a control resource set group index or indication information of the control resource set group index. If the indication information is the same as the control resource set group index of the first indication information, the terminal device may communicate the first signal/channel based on the first spatial parameter indicated by the first indication information, to improve the communication reliability.

In a possible implementation of the first aspect and the second aspect, the first index corresponding to the first indication information includes an index of a control resource set group corresponding to the first DCI, and the first DCI includes the first indication information; and the first index corresponding to the first signal/channel includes an index of a control resource set group corresponding to second DCI, and the second DCI is for scheduling the first signal/channel.

Based on this implementation, if the index of the control resource set group of the second DCI for scheduling or indicating the first signal/channel is the same as the index of the control resource set group of the first DCI for carrying the first indication information, the terminal device may communicate the first signal/channel based on the first spatial parameter indicated by the first indication information, to improve the communication reliability.

In a possible implementation of the first aspect and the second aspect, the first indication information is included in a transmission configuration indication TCI field in the first DCI; and/or the first indication information is carried in a target field in the first DCI, where the target field is a transmission configuration indication TCI field.

In a possible implementation of the first aspect and the second aspect, the first indication information is carried in RRC signaling or MAC CE signaling; and/or any type of signal/channel in the at least two types of signals/channels included in the first type is indicated by RRC signaling or MAC CE signaling.

In a possible implementation of the first aspect and the second aspect, when two types of signals/channels included in the first type include an uplink signal/channel (for example, at least one of the PUCCH, the PUSCH, the SRS, the PTRS, or the DMRS), the first spatial parameter information is type D (type D) quasi co-location (or quasi co-location) (quasi co-location, QCL) information.

According to a third aspect, a communication method is provided. The method may be applied to a scenario in which spatial parameters for a plurality of signals/channels are indicated by TCIs, and the TCI may be referred to as a unified TCI. Specifically, the method may be implemented by a terminal device or a component in the terminal device, where the component is, for example, at least one of a processor, a transceiver, a processing module, or a transceiver module. For example, an execution body is the terminal device. The method includes: The terminal device receives indication information indicating a third spatial parameter and a fourth spatial parameter, or third indication information and fourth indication information, where the third indication information indicates the third spatial parameter, the fourth indication information indicates the fourth spatial parameter, the third spatial parameter is for communicating a third type of signal/channel, the fourth spatial parameter is for communicating a fourth type of signal/channel, and the third type of signal/channel and/or the fourth type of signal/channel include/includes at least two of an SRS, a CSI-RS, a PDSCH, a PDCCH, a PUSCH, a PUCCH, a PTRS, a DMRS, a TRS, or an SSB. The terminal device may further communicate a third signal/channel by using the third spatial parameter, where a port of the third signal/channel or a CDM group to which the port belongs corresponds to the third indication information, and a type of the third signal/channel is the third type.

According to the method shown in the third aspect, the terminal device may receive the indication information indicating the third spatial parameter and the fourth spatial parameter, or receive the third indication information indicating the third spatial parameter and the fourth indication information indicating the fourth spatial parameter, and communicate the third signal/channel by using the third spatial parameter when the port of the third signal/channel or the CDM group to which the port belongs corresponds to the third indication information. The third spatial parameter and/or the fourth spatial parameter may be for communicating at least two of the SRS, the CSI-RS, the PDSCH, the PDCCH, the PUSCH, the PUCCH, the PTRS, the DMRS, the TRS, or the SSB. For example, the third indication information may be a unified TCI. Therefore, according to the method, in a scenario in which a spatial parameter for a signal/channel is indicated by the unified TCI, a spatial parameter used for a to-be-sent signal/channel can be accurately determined, and communication reliability can be improved.

For example, a correspondence between the port of the third signal/channel or the CDM group to which the port belongs and the third indication information may be indicated by a network device, or may be defined in a protocol, preconfigured, or predefined. This is not required.

In a possible implementation of the third aspect, the terminal device may further receive a correspondence between first indication information and a time-frequency resource group and/or a port corresponding to the time-frequency resource group, where the port corresponding to the time-frequency resource group includes a port of a first signal/channel.

In a possible implementation of the third aspect, the terminal device may further determine a transmission mode of the first signal based on a correspondence between the time-frequency resource group to which the port belongs and the transmission mode, where the transmission mode includes an SDM transmission mode, an FDM transmission mode, a TDM transmission mode, or a single-TCI transmission mode.

In a possible implementation of the third aspect, the terminal device may further receive information indicating the at least two types of signals/channels corresponding to the third spatial parameter and/or the fourth spatial parameter.

In a possible implementation of the third aspect, the terminal device may further send transmission capability information, where the transmission capability information indicates that the terminal device supports uplink signal transmission performed by using N beams, and N is a positive integer. If the terminal device supports uplink signal transmission performed by using a plurality of beams, that is, N is greater than or equal to 2, the terminal device may communicate a plurality of PUCCHs by using a plurality of unified TCIs. If the terminal device does not support uplink signal transmission performed by using a plurality of beams, that is, N is less than 2, the terminal device communicates a plurality of PUCCHs by using only one unified TCI. Any PUCCH may be considered as the third signal/channel in the third aspect. Therefore, a spatial parameter for communicating the PUCCH may be determined in the manner shown in the third aspect.

According to a fourth aspect, a communication method is provided. The method may be applied to a scenario in which spatial parameters for a plurality of signals/channels are indicated by TCIs, and the TCI may be referred to as a unified TCI. Specifically, the method may be implemented by a network device or a component in the network device, where the component is, for example, at least one of a processor, a transceiver, a processing module, or a transceiver module. For example, an execution body is a terminal device. The method includes: The network device sends third indication information and fourth indication information, where the third indication information indicates a third spatial parameter, the fourth indication information indicates a fourth spatial parameter, the third spatial parameter is for communicating a third type of signal/channel, the fourth spatial parameter is for communicating a fourth type of signal/channel, and the third type of signal/channel and/or the fourth type of signal/channel include/includes at least two of an SRS, a CSI-RS, a PDSCH, a PDCCH, a PUSCH, a PUCCH, a PTRS, a DMRS, a TRS, or an SSB. The network device may further communicate a third signal/channel by using the third spatial parameter, where a port of the third signal/channel or a CDM group to which the port belongs corresponds to the third indication information, and a type of the third signal/channel is the third type.

According to the method shown in the third aspect, the network device may send the third indication information indicating the third spatial parameter and the fourth indication information indicating the fourth spatial parameter, and communicate the third signal/channel by using the third spatial parameter when the port of the third signal/channel or the CDM group to which the port belongs corresponds to the third indication information. The third spatial parameter and/or the fourth spatial parameter may be for communicating at least two of the SRS, the CSI-RS, the PDSCH, the PDCCH, the PUSCH, the PUCCH, the PTRS, the DMRS, the TRS, or the SSB. For example, the third indication information may be a unified TCI. Therefore, according to the method, in a scenario in which a spatial parameter for a signal/channel is indicated by the unified TCI, a spatial parameter used for a to-be-sent signal/channel can be accurately determined, and communication reliability can be improved.

In a possible implementation of the fourth aspect, the network device may further receive transmission capability information, where the transmission capability information indicates that a terminal device supports uplink signal transmission performed by using N beams, and N is a positive integer. If the terminal device supports uplink signal transmission performed by using a plurality of beams, that is, N is greater than or equal to 2, the network device may communicate a plurality of PUCCHs by using a plurality of unified TCIs or spatial parameters indicated by the plurality of unified TCIs. If the terminal device does not support uplink signal transmission performed by using a plurality of beams, that is, N is less than 2, the network device receives a plurality of PUCCHs by using a spatial parameter indicated by only one unified TCI. Any PUCCH may be considered as a fourth signal/channel in the fourth aspect.

In a possible implementation of the third aspect or the fourth aspect, the third indication information and the fourth indication information are included in same DCI.

In a possible implementation of the third aspect and the fourth aspect, the third indication information and the fourth indication information are included in third DCI, application time of the third indication information and application time of the fourth indication information are after a hybrid automatic repeat request-acknowledgement HARQ-ACK indicated by the third DCI, and sending time of the third signal/channel is after the application time of the third indication information.

According to a fifth aspect, a communication method is provided. The method may be applied to a scenario in which spatial parameters for a plurality of signals/channels are indicated by TCIs, and the TCI may be referred to as a unified TCI. Specifically, the method may be implemented by a terminal device or a component in the terminal device, where the component is, for example, at least one of a processor, a transceiver, a processing module, or a transceiver module. For example, an execution body is the terminal device. The method includes: The terminal device receives fifth indication information and sixth indication information, where the fifth indication information indicates a fifth spatial parameter, the sixth indication information indicates a sixth spatial parameter, the fifth indication information is included in fifth DCI, the sixth indication information is included in sixth DCI, and a HARQ-ACK indicated by the fifth DCI and a HARQ-ACK indicated by the sixth DCI are jointly encoded. The terminal device communicates a PUCCH by using the fifth spatial parameter, the sixth spatial parameter, or a specified spatial parameter, where the PUCCH is for carrying the HARQ-ACK indicated by the fifth DCI and the HARQ-ACK indicated by the sixth DCI.

According to the method shown in the fifth aspect, the terminal device may receive the fifth indication information carried in the fifth DCI and the sixth indication information carried in the sixth DCI, and communicate the PUCCH by using the fifth spatial parameter, the sixth spatial parameter, or the specified spatial parameter when the HARQ-ACK indicated by the fifth DCI and the HARQ-ACK indicated by the sixth DCI are jointly encoded, where the PUCCH is for carrying the HARQ-ACK indicated by the fifth DCI and the HARQ-ACK indicated by the sixth DCI that are jointly encoded, the fifth indication information indicates the fifth spatial parameter, and the sixth indication information indicates the sixth spatial parameter. Therefore, the terminal device can accurately determine a spatial parameter used when the PUCCH is communicated, to improve communication reliability.

According to a sixth aspect, a communication method is provided. The method may be applied to a scenario in which spatial parameters are indicated by unified TCIs. Specifically, the method may be implemented by a network device or a component in the network device, where the component is, for example, at least one of a processor, a transceiver, a processing module, or a transceiver module. For example, an execution body is a terminal device. The method includes: The network device sends/receive fifth indication information and sixth indication information, where the fifth indication information indicates a fifth spatial parameter, the sixth indication information indicates a sixth spatial parameter, the fifth indication information is included in fifth DCI, the sixth indication information is included in sixth DCI, and a HARQ-ACK indicated by the fifth DCI and a HARQ-ACK indicated by the sixth DCI are jointly encoded. The terminal device communicates a PUCCH by using the fifth spatial parameter, the sixth spatial parameter, or a specified spatial parameter, where the PUCCH is for carrying the HARQ-ACK indicated by the fifth DCI and the HARQ-ACK indicated by the sixth DCI.

According to the method shown in the fifth aspect, the network device may send the fifth indication information carried in the fifth DCI and the sixth indication information carried in the sixth DCI, and communicate the PUCCH by using the fifth spatial parameter, the sixth spatial parameter, or the specified spatial parameter when the HARQ-ACK indicated by the fifth DCI and the HARQ-ACK indicated by the sixth DCI are jointly encoded, where the PUCCH is for carrying the HARQ-ACK indicated by the fifth DCI and the HARQ-ACK indicated by the sixth DCI that are jointly encoded, the fifth indication information indicates the fifth spatial parameter, and the sixth indication information indicates the sixth spatial parameter. Therefore, the network device can accurately determine a spatial parameter used when the PUCCH is communicated, to improve communication reliability.

In a possible implementation of the fifth aspect and the sixth aspect, transmission time of the PUCCH is after application time of the fifth spatial parameter, the sixth spatial parameter, or the specified spatial parameter.

According to a seventh aspect, an embodiment of this application provides a communication apparatus. The apparatus has a function of implementing the terminal device in any one of the first aspect, the third aspect, the fifth aspect, or the possible implementations of the first aspect, the third aspect, or the fifth aspect or a function of implementing the network device in any one of the second aspect, the fourth aspect, the sixth aspect, or the possible implementations of the second aspect, the fourth aspect, or the sixth aspect. The communication apparatus may be specifically a terminal device, a component in the terminal device, a network device, or a component in the network device.

Functions of the foregoing communication apparatus may be implemented by hardware, or may be implemented by hardware executing corresponding software. The hardware or the software includes one or more modules, units, or means (means) corresponding to the foregoing functions.

In a possible implementation, a structure of the apparatus includes a processing module and a transceiver module. The processing module is configured to support the apparatus in performing the functions of the terminal device in any one of the first aspect, the third aspect, the fifth aspect, or the possible implementations of the first aspect, the third aspect, or the fifth aspect, and/or is configured to support the apparatus in performing the functions of the network device in any one of the second aspect, the fourth aspect, the sixth aspect, or the possible implementations of the second aspect, the fourth aspect, or the sixth aspect. The transceiver module is configured to support communication between the apparatus and another communication device. For example, when the apparatus is the terminal device, the transceiver module is configured to receive information from a network device and the like. For another example, when the apparatus is the network device, the transceiver module is configured to receive information from a terminal device and the like. The communication apparatus may further include a storage module. The storage module is coupled to the processing module, and stores program instructions and data that are necessary for the apparatus. In an example, the processing module may be a processor, the communication module may be a transceiver, and the storage module may be a memory. The memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus performs the method according to any one of the first aspect, the third aspect, the fifth aspect, or the possible implementations of the first aspect, the third aspect, or the fifth aspect or the method according to any one of the second aspect, the fourth aspect, the sixth aspect, or the possible implementations of the second aspect, the fourth aspect, or the sixth aspect. Optionally, the apparatus further includes a communication interface. The processor is coupled to the communication interface. When the apparatus is the terminal device or the network device, the communication interface may be a transceiver or an input/output interface. When the apparatus is a chip included in the terminal device or the network device, the communication interface may be an input/output interface of the chip. Optionally, the transceiver may be a transceiver circuit, and the input/output interface may be an input/output circuit.

According to an eighth aspect, an embodiment of this application provides a communication system. The communication system may include a communication apparatus configured to implement the method in any one or more of the first aspect to the sixth aspect and the possible implementations thereof. Alternatively, the communication system may include one or more of a terminal device and a network device. The terminal device may be configured to implement the method according to any one of the first aspect, the third aspect, the fifth aspect, or the possible implementations of the first aspect, the third aspect, or the fifth aspect. The network device may be configured to implement the method according to any one of the second aspect, the fourth aspect, the sixth aspect, or the possible implementations of the second aspect, the fourth aspect, or the sixth aspect.

According to a ninth aspect, an embodiment of this application provides a computer-readable storage medium. The computer-readable storage medium stores program instructions. When the program instructions are run on a computer, the computer is enabled to perform the method according to any one of the first aspect to the sixth aspect and the possible implementations of the first aspect to the sixth aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically erasable programmable read-only memory, EEPROM), a CD-ROM or another optical disk storage, a magnetic disk storage medium or another magnetic storage device, or any other medium that can be configured to carry or store expected program code in a form of instructions or a data structure and that can be accessed by the computer.

According to a tenth aspect, an embodiment of this application provides a computer program product, including computer program code or instructions. When the computer program code or the instructions are run on a computer, the method according to any one of the first aspect to the sixth aspect or the possible implementations is enabled to be performed.

According to an eleventh aspect, this application further provides a chip, including a processor. The processor is coupled to a memory, and is configured to read and execute program instructions stored in the memory, so that the chip implements the method according to any one of the first aspect to the sixth aspect or the possible implementations.

For each of the seventh aspect to the eleventh aspect and technical effects that may be achieved by each aspect, refer to the descriptions of the beneficial effect of the methods according to any one of the first aspect to the sixth aspect and the possible implementations of the first aspect to the sixth aspect. Details are not described herein again.

### BRIEF DESCRIPTION OF DRAWINGS

FIG. 1 is a diagram of an architecture of a wireless communication system according to this application;
FIG. 2 is a diagram of beam training according to this application;
FIG. 3 is a signal flowchart of indicating beam information of a PDSCH according to this application;
FIG. 4 is a diagram of a format of MAC CE signaling according to this application;
FIG. 5 is a schematic flowchart of a communication method according to this application;
FIG. 6 is a diagram of signal exchange according to this application;
FIG. 7 is a schematic flowchart of another communication method according to this application;
FIG. 8 is another diagram of signal exchange according to this application;
FIG. 9 is a schematic flowchart of another communication method according to this application;
FIG. 10 is a diagram of a structure of a communication apparatus according to this application; and
FIG. 11 is a diagram of a structure of another communication apparatus according to this application.

### DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may represent: Only A exists, both A and B exist, and only B exists, where A and B may be singular or plural. In addition, in the descriptions of this application, "a plurality of" means two or more than two unless otherwise specified. "At least one of the following" or a similar expression thereof indicates any combination of the items, and includes a singular item or any combination of plural items. For example, at least one of a, b, or c may represent: a, b, c, a and b, a and c, b and c, or a, b, and c, where a, b, and c may be singular or plural. In addition, for ease of clear description of the technical solutions in embodiments of this application, terms such as "first" and "second" are used in embodiments of this application to distinguish between same items or similar items that provide basically same functions. A person skilled in the art may understand that the terms such as "first" and "second" do not limit a quantity or an execution sequence, and the terms such as "first" and "second" do not indicate a definite difference.

In addition, the network architecture and the service scenario in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of a new service scenario, the technical solutions provided in embodiments of this application are also applicable to similar technical problems.

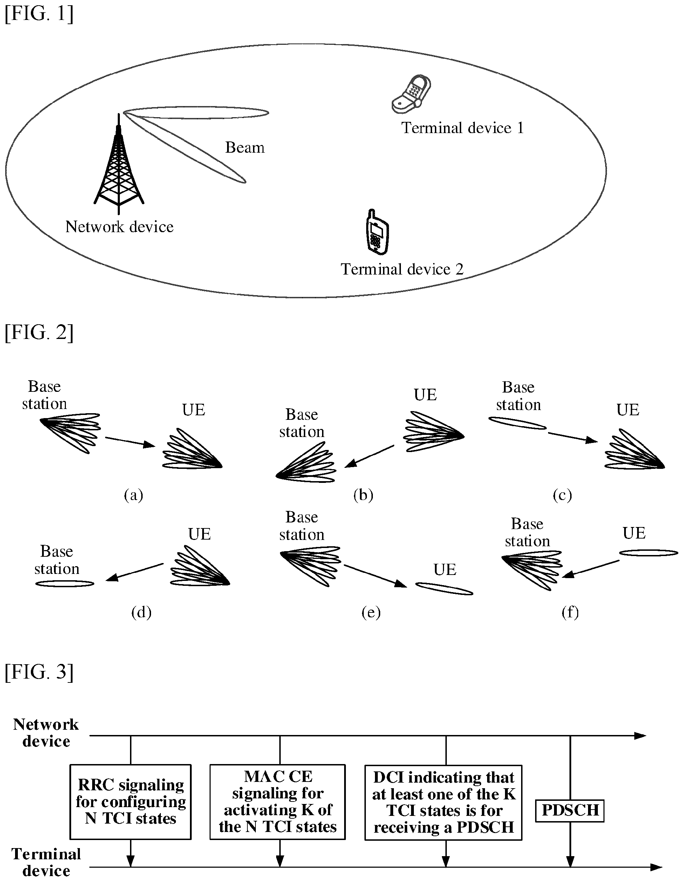

For ease of understanding embodiments of this application, a communication system shown in FIG. 1 is first used as an example to describe a communication system used in embodiments of this application. FIG. 1 shows an architecture of a possible communication system applicable to methods provided in embodiments of this application. The architecture of the communication system includes a network device and at least one terminal device. The network device may establish a communication link with the at least one terminal device (for example, a terminal device 1 and a terminal device 2 shown in the figure) by using beams in different directions. The network device may provide the at least one terminal device with a service related to wireless access, to implement one or more of the following functions: a wireless physical layer function, resource scheduling and radio resource management, quality of service (quality of service, QoS) management, radio access control, and a mobility management function. The at least one terminal device may also form a beam for data transmission with the network device. In this embodiment, the network device may communicate with the at least one terminal device by using the beam.

It should be understood that, the network device in embodiments of this application may be any device having a wireless transceiver function or a chip that may be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB (home evolved NodeB), or a home NodeB (home NodeB, HNB)), a base band unit (base band unit, BBU), or an access point (access point, AP), a wireless relay node, a wireless backhaul node, a transmission point (transmission point, TP), a transmission reception point (transmission reception point, TRP/TP), a remote radio head (remote radio head, RRH), or the like in a wireless fidelity (wireless fidelity, Wi-Fi) system, may be a gNodeB (gNB) or a transmission point in a 5G, for example, NR, system, or one antenna panel or one group (including a plurality of antenna panels) of antenna panels of a base station in a 5G system, or may be a network node that a gNB or a transmission point consists of, for example, a baseband unit or a distributed unit (distributed unit, DU). Alternatively, the network device may be a radio controller in a cloud radio access network (cloud radio access network, CRAN) scenario, or the network device may be a relay station, an access point, a vehicle-mounted device, a wearable device, an access network device (for example, a gNB) in a future 5G network, an access network device in a future evolved PLMN network, or the like. This is not limited in embodiments of this application.

In some deployment, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in a radio access network (radio access network, RAN), or the CU may be classified as a network device in a core network (core network, CN). This is not limited in this application.

For example, the network device may be used as a scheduling device. In this case, the network device may include, for example, but is not limited to: an LTE eNodeB eNB, an NR gNodeB gNB, an operator, and the like. Functions thereof may include, for example, configuring uplink and downlink resources, and sending downlink control information (downlink control information, DCI) in a scheduling mode of the base station. For example, the network device may further be used as a sending device. In this case, the network device may include, for example, but is not limited to: a TRP and an RRH, and functions thereof may include, for example, sending a downlink signal and receiving an uplink signal.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in the future 5G network, a terminal device in the future evolved public land mobile network (public land mobile network, PLMN), or the like. This is not limited in embodiments of this application. The terminal device in embodiments of this application may be a mobile phone (mobile phone), a tablet (pad), a computer having a wireless transceiver function, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the terminal device and a chip that may be disposed in the terminal device are collectively referred to as a terminal device.

Functions of the terminal device may include, for example, but are not limited to: receiving a downlink/sidelink signal, and/or sending an uplink/sidelink signal.

For example, the network device and the terminal device may include an RRC signaling exchange module, a MAC signaling exchange module, and a PHY signaling exchange module. The RRC signaling exchange module may be a module used by the network device and the terminal device to send and receive RRC signaling. The MAC signaling exchange module may be a module used by the network device and the terminal device to send and receive a MAC control element (control element, CE). PHY signaling and data may be a module used by the network device and the terminal device to send and receive uplink control signaling, downlink control signaling, uplink and downlink data, or downlink data.

In transmission, the communication system usually uses different types of reference signals. One type of reference signal is for channel estimation, so that coherent demodulation can be performed on a received signal that includes control information or data. Another type of reference signal is for channel state measurement or channel quality measurement, so that the UE is scheduled. The UE may obtain channel state information CSI based on channel quality measurement of a channel state information reference signal (channel state information reference signal, CSI-RS), where the CSI includes at least one of a rank indicator (rank indicator, RI), a precoding matrix indicator (precoding matrix indicator, PMI), a channel quality indicator (channel quality indicator, CQI), and the like. The CSI information may be sent by the user equipment to the base station through a physical uplink control channel or a physical uplink shared channel.

A wireless communication system mentioned in embodiments of this application includes but is not limited to a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, a long term evolution advanced (LTE-advanced, LTE-A) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, 5G, a converged system of a plurality of access systems, an evolved system, three main application scenarios of a 5G mobile communication system, namely, enhanced mobile broadband (enhanced mobile broadband, eMBB), ultra-reliable and low-latency communication (ultra-reliable and low-latency communication, URLLC), and enhanced machine type communication (enhanced machine type communication, eMTC), or a new communication system that emerges in the future.

It should be noted that the architecture of the communication system shown in FIG. 1 is not limited to including only the devices shown in the figure, and may further include another device not shown in the figure. Details are not described herein in this application one by one.

The following first provides definitions of technical terms that may occur in embodiments of this application.
(1) Reference signal resource: In embodiments of this application, a resource used by a network device to send a reference signal may be referred to as the reference signal resource, and the reference signal may be any one of the following signals: a synchronization signal, a broadcast channel, a synchronization signal/physical broadcast channel block (synchronization signal/physical broadcast channel block, SS/PBCH block), a broadcast signal demodulation signal, a channel state information reference signal (channel state information reference signal, CSI-RS), a cell specific reference signal (cell specific reference signal, CS-RS), a user equipment specific reference signal (user equipment specific reference signal, US-RS), a downlink control channel demodulation reference signal, a downlink data channel demodulation reference signal, a downlink phase noise tracking signal, a sounding reference signal (sounding reference signal, SRS), and the like. The SS/PBCH block may be referred to as a synchronization signal block (synchronization signal block, SSB) for short.
(2) Beam (beam): The beam is a communication resource. The beam may be a wide beam, a narrow beam, or another type of beam. A technology for forming the beam may be a beamforming technology or another technology means. The beamforming technology may be specifically a digital beamforming technology, an analog beamforming technology, or a hybrid digital/analog beamforming technology. Different beams may be considered as different resources. Same information or different information may be sent by using the different beams.

Optionally, a plurality of beams having same or similar communication features may be considered as one beam. One beam corresponds to one or more antenna ports, and is for communicating a data channel, a control channel, a sounding signal, and the like. The one or more antenna ports corresponding to the beam may alternatively be considered as one antenna port set.

A beam for sending a signal may be referred to as a transmit beam (transmit beam, Tx beam), a spatial domain transmit filter (spatial domain transmit filter), or a spatial transmit parameter (spatial transmit parameter). A beam for receiving a signal may be referred to as a receive beam (receive beam, Rx beam), a spatial domain receive filter (spatial domain receive filter), or a spatial receive parameter (spatial RX parameter).

The transmit beam may refer to distribution of signal strength formed in different directions in space after a signal is transmitted through an antenna, and the receive beam may refer to distribution of signal strength, in different directions in space, of a radio signal received from an antenna.

Beams may be classified into a transmit beam and a receive beam of a network device, and a transmit beam and a receive beam of a terminal device. The transmit beam of the network device is for describing transmitting-side beamforming information of the network device, and the receive beam of the network device is for describing receiving-side beamforming information of the network device. The transmit beam of the terminal device is for describing transmitting-side beamforming information of the terminal device, and the receive beam of the terminal device is for describing receiving-side beamforming information of the terminal device. That is, the beam may be for describing beamforming information.

The beam usually corresponds to the resource, and the beam may correspond to a time resource, a space resource, and a frequency domain resource.

Optionally, the beam may alternatively correspond to a reference signal resource (for example, a reference signal resource for beamforming) or the beamforming information.

Optionally, the beam may alternatively correspond to information associated with a reference signal resource of the network device. The reference signal may be, for example, a CSI-RS, an SSB, a DMRS, a phase tracking signal (phase tracking reference signal, PTRS), or a TRS. Information associated with the reference signal resource may be a reference signal resource index (or identifier), QCL information (for example, type D QCL), or the like. The reference signal resource index corresponds to one transmit-receive beam pair previously established during measurement performed based on the reference signal resource. The terminal device may infer beam information based on the reference signal resource index.

Optionally, the beam may further correspond to a spatial domain filter (spatial filter or spatial domain filter) or a spatial domain transmission filter (spatial domain transmission filter).

The receive beam may be equivalent to a spatial transmission filter, the spatial domain transmission filter, the spatial domain receive filter, or a spatial receive filter. The transmit beam may be equivalent to the spatial domain filter, the spatial domain transmission filter, the spatial domain transmit filter, or a spatial transmit filter. Information about a spatial related parameter may be equivalent to a spatial filter (spatial domain transmit/receive filter). Optionally, the spatial filter usually includes the spatial transmit filter and/or the spatial receive filter. The spatial filter may also be referred to as the spatial domain transmit filter, the spatial domain receive filter, the spatial transmission filter, the spatial domain transmission filter, or the like. A receive beam on a terminal device side and a transmit beam on a network device side each may be a downlink spatial filter, and a transmit beam on the terminal device side and a receive beam on the network device side each may be an uplink spatial filter.

A signal transmission mechanism based on the beamforming technology is used, to compensate for the loss in a signal propagation process by using a high antenna gain. A beamformed signal may include a broadcast signal, a synchronization signal, a channel state information reference signal, and the like. When a signal is communicated based on the beamforming technology, once a user moves, a direction of a shaped beam corresponding to the communicated signal may no longer match a location of the user after the movement, and signal receiving is frequently interrupted. To track a change of the shaped beam in a signal transmission process, channel quality measurement and result reporting based on the beamforming technology are introduced. The channel quality measurement may be based on a synchronization signal or a channel state information-reference signal obtained through the beamforming. The user performs handover between different shaped beams more dynamically and frequently than handover between cells. Therefore, a dynamic measurement and reporting mechanism is needed. Optionally, reporting of a channel quality result of a reference signal on the shaped beam may alternatively be implemented by being sent by user equipment to a base station through a PUCCH or a PUSCH.

The UE selects N optimal beams of the base station by measuring a plurality of beams sent by the base station, and reports measurement information of the N optimal beams to the base station. Measurement information of the beam mainly includes at least one of a reference signal resource index, a reference signal received power (reference signal received power, RSRP), and a signal to interference plus noise ratio (signal to interference plus noise ratio, SINR). A part numbered e shown in FIG. 2 is a training process of the beams sent by the base station. Conversely, as shown in a part numbered d in FIG. 2, the UE sends a plurality of beams, and the base station measures the plurality of beams sent by the UE, and notifies the UE of an optimal beam in the plurality of beams sent by the UE. In addition, the word "beam" is not used in the standard. A beam on a transmitting side of the base station is represented by using a reference signal resource, for example, a beam index 1, which is described as a reference signal resource index 1 in the standard. A receive beam on a terminal side is indicated by a spatial Rx parameter in QCL. Beam state information is described as L1-RSRP related information (related information) or L1-SINR related information in the standard.

As shown in FIG. 2, a beam training process between the base station and the UE may include the following steps.
(1) Select N optimal beam pairs (beam pair links, BPLs) (one BPL includes one base station transmit beam and one UE receive beam, or one BPL includes one UE transmit beam and one base station receive beam). The UE selects the base station transmit beam and/or the UE receive beam based on beam sweeping performed by the network device, and the network device selects the UE transmit beam and/or the base station receive beam based on beam sweeping performed by the UE, as shown in a part numbered a and a part numbered b in FIG. 2.
(2) Update a transmit beam. The transmit beam may be the base station transmit beam, or may be the UE transmit beam. When the transmit beam is the base station transmit beam, as shown in the part numbered e in FIG. 2, the base station sends reference signals to the UE through different transmit beams; and the UE receives, through a same receive beam, the reference signals sent by the base station through the different transmit beams, determines an optimal base station transmit beam based on the received signals, and then feeds back the optimal base station transmit beam to the base station, so that the base station updates the transmit beam. When the transmit beam is the UE transmit beam, as shown in the part numbered d in FIG. 2, the UE sends reference signals to the base station through different transmit beams; and the base station receives, through a same receive beam, the reference signals sent by the UE through the different transmit beams, determines an optimal UE transmit beam based on the received signals, and then feeds back the optimal UE transmit beam to the UE, so that the UE updates the transmit beam. The process of sending the reference signals through the different transmit beams may be referred to as the beam sweeping, and the process of determining the optimal transmit beam based on the received signals may be referred to as beam matching.
(3) Update a receive beam. The receive beam may be the base station receive beam, or may be the UE receive beam. When the receive beam is the base station receive beam, as shown in a part numbered f in FIG. 2, the UE sends reference signals to the base station through a same transmit beam, and the base station receives, through different receive beams, the reference signals sent by the UE, and then determines an optimal base station receive beam based on the received signals, to update the base station receive beam. When the receive beam is the UE receive beam, as shown in a part numbered c in FIG. 2, the base station sends reference signals to the UE through a same transmit beam, and the UE receives, through different receive beams, the reference signals sent by the base station, and then determines an optimal UE receive beam based on the received signals, to update the UE receive beam.

During transmission of a downlink signal, both the base station transmit beam and the UE receive beam may dynamically change, and a plurality of optimal receive beams may be determined by the UE based on the received signals. To enable the UE to determine the UE receive beam, the UE may feed back information about the plurality of receive beams to the network device, and the base station may indicate the UE receive beam to the UE by sending beam indication information to the UE. When the UE uses beamforming in an analog domain, the UE may precisely determine the UE receive beam based on the beam indication information sent by the base station. Therefore, beam sweeping time of the UE can be reduced, and power is saved.

(3) Information about a spatial related parameter:

The information about the spatial related parameter (which is also referred to as a spatial parameter) may include quasi co-location (or quasi co-location) (quasi co-location, QCL) information, and may further include spatial relation (spatial relation) information.

Usually, the QCL information indicates a spatial related parameter (which may also be referred to as a spatial related characteristic) of a downlink signal/channel, and the spatial relation information indicates a spatial related parameter (which may also be referred to as a spatial related characteristic) of an uplink signal/channel.

The uplink signal/channel may include but is not limited to: a physical uplink control channel (physical uplink control channel, PUCCH), a physical uplink shared channel (physical uplink shared channel, PUSCH), a sounding reference signal (sounding reference signal, SRS), a phase tracking reference signal (phase tracking reference signal, PTRS), and a demodulation reference signal (demodulation reference signal, DMRS).

The downlink signal/channel may include but is not limited to: a physical downlink control channel (physical downlink control channel, PDCCH), a physical downlink shared channel (physical downlink shared channel, PDSCH), a tracking reference signal (tracking reference signal, TRS), a channel state information reference signal (channel state information reference signal, CSI-RS), a phase tracking reference signal (phase tracking reference signal, PTRS), a demodulation reference signal (demodulation reference signal, DMRS), and an SSB. The SSB includes one or more of the following: a primary synchronization signal (primary synchronization signal, PSS), a secondary synchronization signal (secondary synchronization signal, SSS), and a PBCH. The SSB is a signal mainly for cell searching, cell synchronization, and carrying a signal of broadcast information.

The spatial relation information is for assisting in describing transmitting-side beamforming information and a transmitting procedure of a terminal device.

The spatial relation information indicates a spatial transmit parameter relationship between two reference signals. A target reference signal is usually a downlink signal, and may be, for example, a DMRS or an SRS. A referenced reference signal or a source reference signal may be usually a CSI-RS, an SRS, an SSB, or the like.

Quasi co-location may also be referred to as quasi co-site or co-location. The QCL information may also be referred to as QCL assumption information. The QCL information is for assisting in describing receiving-side beamforming information and a receiving procedure of the terminal device.

The QCL information may indicate a QCL relationship between two reference signals. A target reference signal is usually a downlink signal, and may be, for example, a DMRS or a CSI-RS. A referenced reference signal or a source reference signal may be usually a CSI-RS, an SSB, a TRS, or the like. The TRS is also a type of the CSI-RS.

QCL information of the PDCCH is used as an example, and a method for configuring the QCL information of the PDCCH may be as follows:

K pieces of candidate QCL information of the PDCCH are configured. For example, the K pieces of candidate QCL information of the PDCCH are configured by using RRC. The K pieces of candidate QCL information may include, for example, K transmission configuration indication (transmission configuration indicator, TCI) states (TCI states). K is an integer greater than or equal to 1.

The QCL information of the PDCCH is indicated. For example, the QCL information of the PDCCH is indicated by a media access control (media access control, MAC) control element (control element, CE) (MAC CE) (optionally, when K is an integer greater than 1).

It may be specified that in an initial radio resource control (radio resource control, RRC) phase and a MAC CE phase, the terminal device assumes that DMRSs on the PDCCH and the PDSCH and an SSB determined during initial access are QCLed (in other words, have a QCL relationship).

Signals corresponding to antenna ports having a QCL relationship may have same or similar spatial characteristic parameters (which are also referred to as parameters), a spatial characteristic parameter (which is also referred to as a parameter) of one antenna port may be for determining a spatial characteristic parameter (which is also referred to as a parameter) of another antenna port that has a QCL relationship with the antenna port, two antenna ports have same or similar spatial characteristic parameters (which are also referred to as parameters), or a difference between spatial characteristic parameters (which are also referred to as parameters) of two antenna ports is less than a threshold.

It should be understood that spatial characteristic parameters for two reference signals or channels that satisfy a QCL relationship are the same (or close or similar), so that a spatial characteristic parameter of the target reference signal can be inferred based on a resource index of the source reference signal.

It should further be understood that spatial characteristic parameters for two reference signals or channels that satisfy spatial relation information are the same (or close or similar), so that a spatial characteristic parameter of the target reference signal can be inferred based on a resource index of the source reference signal.

The spatial characteristic parameter may include one or more of the following parameters:
an angle of arrival (angle of arrival, AoA), a dominant (dominant) angle of arrival AoA, an average angle of arrival, a power angular spectrum (power angular spectrum, PAS) of the angle of arrival, an angle of departure (angle of departure, AoD), a dominant angle of departure, an average angle of departure, a power angular spectrum of the angle of departure, transmit beamforming of the terminal device, receive beamforming of the terminal device, spatial channel correlation, transmit beamforming of a network device, receive beamforming of the network device, an average channel gain, an average channel delay (average delay), a delay spread (delay spread), a Doppler spread (Doppler spread), a Doppler shift (doppler shift), a spatial receive parameter (spatial Rx parameter), or the like.

The foregoing angles may be decomposition values at different dimensions or a combination of the decomposition values at the different dimensions. The antenna ports may be antenna ports having different antenna port numbers. Alternatively, the antenna ports may be antenna ports that have a same antenna port number or different antenna port numbers and that send or receive information at different time. Alternatively, the antenna ports may be antenna ports that have a same antenna port number or different antenna port numbers and that send or receive information on different frequencies. Alternatively, the antenna ports may be antenna ports that have a same antenna port number or different antenna port numbers and that send or receive information on different code domain resources.

These spatial characteristic parameters describe a characteristic of a spatial channel between an antenna port for the source reference signal and an antenna port for the target reference signal, and help the terminal device complete receiving-side beamforming or a receiving processing process based on the QCL information. For example, the terminal device may receive the target reference signal based on receive beam information that is of the source reference signal and that is indicated by the QCL information. These spatial characteristic parameters further help the terminal device complete transmitting-side beamforming or a transmitting processing process based on the spatial related information. For example, the terminal device may transmit the target reference signal based on transmit beam information that is of the source reference signal and that is indicated by the spatial related information.

To reduce overheads of indicating the QCL information by the network device to the terminal device, in an optional implementation, the network device may indicate that a demodulation reference signal on the PDCCH or the PDSCH and one or more of a plurality of reference signal resources previously reported by the terminal device satisfies a QCL relationship. For example, the reference signal may be a CSI-RS. An index of each reported CSI-RS resource corresponds to one transmit-receive beam pair previously established during measurement performed based on the CSI-RS resource. It should be understood that information about receive beams for the two reference signals or channels that satisfy the QCL relationship is the same, and the terminal device may infer, based on indexes of the reference signal resources, information about a receive beam for receiving the PDCCH or the PDSCH.

In an existing protocol, QCL relationships may be classified into the following four types based on different parameters:
a type A (type A) QCL relationship (or type A QCL information): the Doppler shift (Doppler shift), the Doppler spread (Doppler spread), the average delay (average delay), and the delay spread (delay spread);
a type B (type B) QCL relationship (which is also referred to as type B QCL information): the Doppler shift and the Doppler spread;
a type C (type C) QCL relationship (which is also referred to as type C QCL information): the Doppler shift and the average delay; and
a type D (type D) QCL relationship (which is also referred to as type D QCL information): the spatial receive parameter (spatial Rx parameter).

The network device may simultaneously configure one or more types of QCL for the terminal device, for example, a QCL type A+type D QCL relationship or a type C+type D QCL relationship.

When a QCL relationship is a type D QCL relationship, the QCL relationship may be considered as spatial QCL. When antenna ports satisfy the spatial QCL relationship, the QCL relationship may be a QCL relationship (which is referred to as the spatial relation above) between ports for downlink signals or ports for uplink signals. For example, a QCL relationship between the downlink signal and the uplink signal or a QCL relationship between ports for the uplink signal and the downlink signal may be that the two signals may have a same AOA or AOD, to indicate that the two signals have a same receive beam or transmit beam. For another example, a QCL relationship between the downlink signal and the uplink signal or a QCL relationship between ports for the uplink signal and the downlink signal may be that there is a correspondence between AOAs and AODs of the two signals, or that there is a correspondence between AODs and AOAs of the two signals. That is, beam reciprocity may be for determining an uplink transmit beam based on a downlink receive beam or determining a downlink receive beam based on an uplink transmit beam.

From a perspective of a transmitting end, if two antenna ports are spatial QCLed, it may mean that corresponding beam directions of the two antenna ports are consistent in space. From a perspective of a receiving end, if two antenna ports are spatial QCLed, it may mean that the receiving end can receive, in a same beam direction, signals sent through the two antenna ports.

Signals communicated on ports having a spatial QCL relationship may further have corresponding beams. The corresponding beam may include one or more of the following: a same receive beam, a same transmit beam, a transmit beam corresponding to a receive beam (for example, which may correspond to a reciprocity scenario), and a receive beam corresponding to a transmit beam (for example, which may correspond to a reciprocity scenario).

Signals communicated on ports having a spatial QCL relationship may alternatively be understood as signals received or sent by using a same spatial filter (spatial filter). The spatial filter may be one or more of the following: precoding, a weight of an antenna port, phase deflection of the antenna port, or an amplitude gain of the antenna port.

Signals communicated on ports having a spatial QCL relationship may alternatively be understood as having corresponding beam pair links (beam pair links, BPLs). The corresponding BPL includes one or more of the following: a same downlink BPL, a same uplink BPL, an uplink BPL corresponding to a downlink BPL, or a downlink BPL corresponding to an uplink BPL.

Therefore, the spatial receive parameter (namely, the type D QCL) may be understood as a parameter indicating direction information of a receive beam.

In an example of this application, correspondences of some parameters may also be applied to a scenario with QCL descriptions.

It should be understood that a scenario applicable to QCL assumption in this application may alternatively be two reference signals or an association relationship between transmission objects.

(4) Control resource set (control resource set, CORESET): a resource set for communicating downlink control information, which may also be referred to as a control resource region or a physical downlink control channel resource set.

A network device may configure one or more control resource sets for a terminal device to send a PDCCH. The network device may send a control channel to the terminal device on any control resource set corresponding to the terminal device. In addition, the network device further needs to notify the terminal device of another configuration associated with the control resource set, for example, a search space set (search space set). All control resource sets have a difference in configuration information, for example, a difference in a frequency domain width or a difference in a time domain length.

Optionally, the control resource set in this application may be any one of the following: a CORESET defined in a 5G mobile communication system, a control region (control region), or an enhanced physical downlink control channel (enhanced physical downlink control channel, ePDCCH) set (set).

A time-frequency location occupied by the PDCCH may be referred to as a downlink control region. In a possible case, the PDCCH is always located in the first m orthogonal frequency division multiplexing (orthogonal frequency division multiplexing, OFDM) symbols (which may be referred to as symbols for short in this application) of a subframe, where a possible value of m is 1, 2, 3, or 4. The ePDCCH and a relay physical downlink control channel (relay physical downlink control channel, R-PDCCH) are not located in the first m symbols.

The downlink control region may be flexibly configured by using RRC signaling by using the control resource set and the search space set. Information such as a frequency domain location of the PDCCH or a control channel element (control channel element, CCE) and a quantity of contiguous symbols in time domain may be configured in the control resource set. Information such as a PDCCH detection periodicity and offset and a start symbol in a slot may be configured in the search space set.

For example, if it may be configured in the search space set that a PDCCH periodicity is one slot and a start symbol in time domain is a symbol 0, the terminal device may detect the PDCCH at a start location of each slot.

(5) TCI state: The TCI state may indicate QCL information of a signal or a channel. The channel may be, for example, a PDCCH, a CORESET, or a PDSCH. The signal may be, for example, a CSI-RS, a DMRS, or a TRS. TCI information may mean that a reference signal included in a TCI and the channel satisfy a QCL relationship, and mainly indicates that during reception of the channel, information such as a spatial characteristic parameter of the channel is the same as, similar to, or close to information such as a spatial characteristic parameter of the reference signal included in the TCI. The TCI information may alternatively mean that a reference signal included in a TCI and the signal satisfy a QCL relationship, and mainly indicates that during reception of the signal, information such as a spatial characteristic parameter of the signal is the same as, similar to, or close to information such as a spatial characteristic parameter of the reference signal included in the TCI.

One or more referenced reference signals and an associated QCL type (QCL type) may be configured for one TCI state. In other words, configuration information of the TCI state may include an identifier of one or two reference signal resources and an associated QCL type. QCL types may further be classified into four types: a type A, a type B, a type C, and a type D, which are different combinations or selections of {Doppler shift, Doppler spread, average delay, delay spread, and spatial Rx parameter}. The TCI state includes the QCL information, or the TCI state indicates the QCL information.

The TCI state is configured by a network device for terminal devices. The following is an example format of the TCI state:

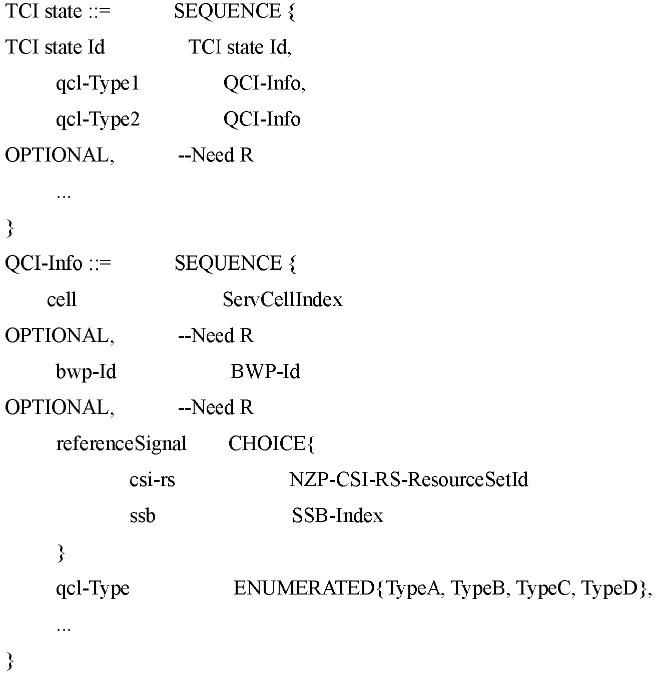

In addition, the TCI state may be globally configured. In TCI states configured for different cells and different bandwidth parts (bandwidth parts, BWPs), if indexes of the TCI states are the same, configurations of the corresponding TCI states are also the same.

Table 1 shows a method for indicating beams for the PDSCH, the PDCCH, the CSI-RS, a PUCCH, an SRS, and a PUSCH based on the TCI state.

**Table 1**

| Signal/Channel | Beam indication signaling | Simultaneous update of a plurality of resource beams |
|---|---|---|
| PDSCH | RRC is for configuring N TCI states; a maximum of eight of the N TCI states are activated by using a MAC CE, and are mapped to codepoints (codepoints) in a TCI field in downlink control information (DCI); and the TCI field in the DCI indicates the codepoints, where a TCI state indicated by the DCI is for receiving the PDSCH; and in an implementation, the MAC CE is for mapping a maximum of two TCI states to each codepoint in the TCI field in the DCI; or in another implementation, the MAC CE is for mapping a maximum of one TCI state to each codepoint in the TCI field in the DCI | One MAC CE is for simultaneously updating TCI state IDs of PDSCHs on a plurality of CCs/in a plurality of BWPs |
| PDCCH | The RRC is for selecting M TCI states from the N TCI states of the PDSCH, to configure the M TCI states for UE; and the MAC CE is for activating one of the M TCI states | The MAC CE is for simultaneously updating TCI state IDs that have a same CORESET ID on the plurality of CCs/in the plurality of BWPs |
| CSI-RS | The RRC is for selecting one TCI state from the N TCI states of the PDSCH, to configure the TCI state for the UE | |
| PUCCH | The RRC is for configuring N spatial relations; and the MAC CE is for activating one of the N spatial relations | The MAC CE is for simultaneously updating spatial relations of a PUCCH resource group |
| SRS | Periodic SRS: The RRC is for configuring one spatial relation; semi-periodic SRS: The RRC is for configuring one spatial relation, or the MAC CE indicates one spatial relation for each semi-periodic SRS; and aperiodic SRS: The RRC is for configuring one spatial relation, or the MAC CE indicates one spatial relation | The MAC CE is for simultaneously updating spatial relations that have a same SRS (semi-periodic/aperiodic SRS) resource ID on the plurality of CCs/in the plurality of BWPs |
| PUSCH | An SRI field in the DCI indicates a spatial relation | |

As shown in Table 1, beam information (or a QCL message) of the PDSCH may be indicated by three levels of signaling: an RRC message, the MAC CE, and the DCI, as shown in FIG. 3. In addition, beam information of the PDSCH may alternatively be indicated by two levels of signaling: the RRC and the DCI.

The following provides descriptions with reference to FIG. 3.
1. The RRC message may be for configuring the N TCI states for the PDSCH.
   For example, in a protocol, an indication field in the RRC message may be configured as follows: 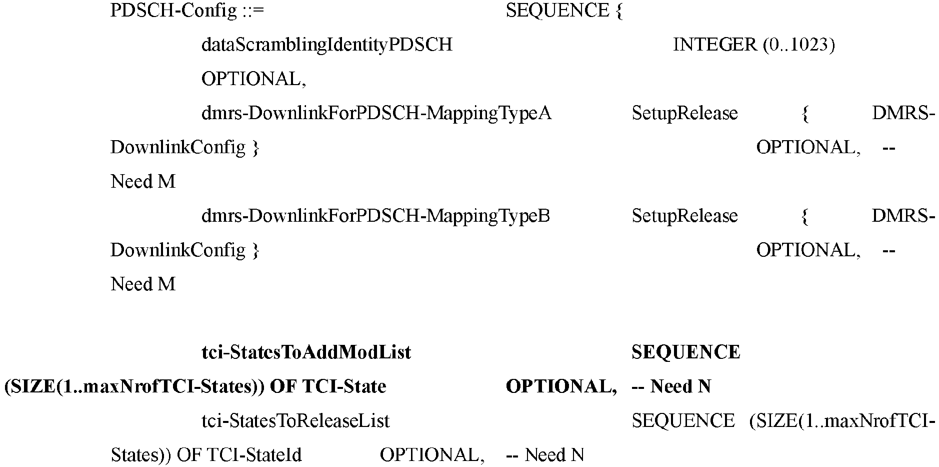
2. The MAC CE is for activating K (a subset of the N TCI states, where K is less than or equal to N) of the N TCI states.

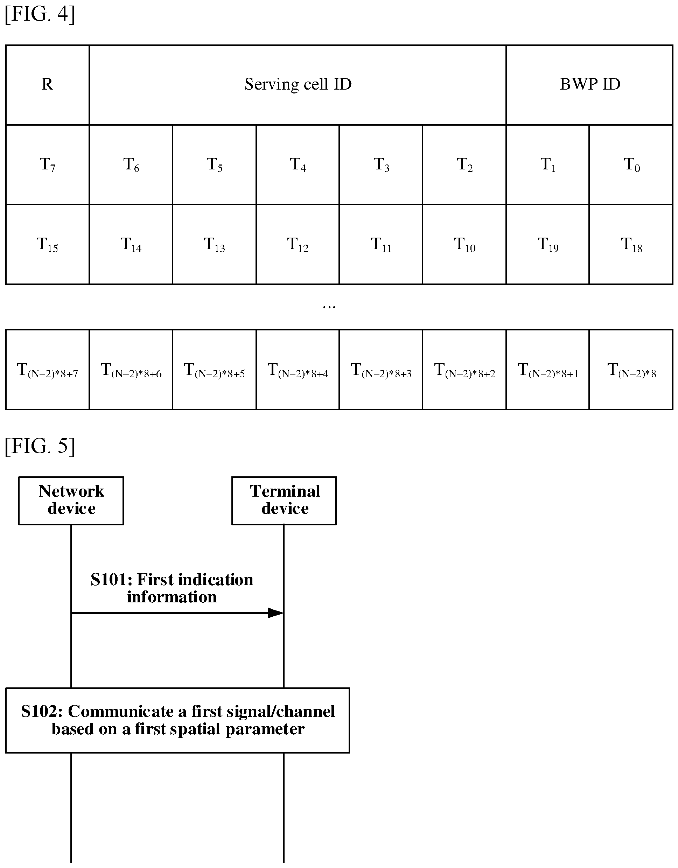

For example, the MAC CE may be configured as shown in FIG. 4. A serving cell identifier (serving cell ID) field may indicate an ID of a serving cell to which a TCI state indicated by the MAC CE belongs. A BWP identifier field may include a BWP identifier (identifier, ID), and indicate a downlink bandwidth region to which the MAC CE is applied. Ti indicates an activated/deactivated state of a TCI state whose TCI state identifier is i, where i=0, 1, 2, .... For example, if a Ti field is set to "1", it indicates that the TCI state whose TCI state identifier is i is activated, and is mapped to the TCI field in the DCI. If a Ti field is set to "0", it indicates that the TCI state whose TCI state identifier is i is deactivated, and is not mapped to the TCI field in the DCI.

During mapping from the TCI states to the codepoints in the DCI, all TCI states whose Ti fields are set to "1" are mapped in sequence. For example, a 1^{st} TCI state whose Ti field is set to "1" is mapped to a codepoint value (value) 0, and a 2^{nd} TCI state whose Ti field is set to "1" is mapped to a codepoint value 1. A maximum quantity of activated TCI states is 8.

For another example, the MAC CE may alternatively be for mapping a maximum of two TCI states to one codepoint in the TCI field in the DCI (mainly in a multi-TPR transmission scenario).

3. X bits (bits) in the TCI field in the DCI indicate that at least one of the K TCI states is for receiving the PDSCH.

For example, X=3, and the TCI field in the DCI may indicate one of TCI states shown in Table 2.

**Table 2**

| TCI field value | TCI state |
|---|---|
| 000 | TCI state ID a1 |
| 001 | TCI state ID a2 |
| 010 | TCI state ID a3 |
| 011 | TCI state ID a4 |
| 100 | TCI state ID a5 |
| 101 | TCI state ID a6 |
| 110 | TCI state ID a7 |
| 111 | TCI state ID a8 |

Whether there is a TCI field in the DCI may be indicated by higher layer signaling such as the RRC message, for example, may be indicated by a higher layer parameter in the RRC message, namely, an indication indicating that the TCI field is present in the DCI (RRC TCI-PresentInDCI).

In Table 1, still as shown in FIG. 4, beam information (or a QCL message) of the PDCCH may be indicated by two levels of signaling: the RRC message and the MAC CE.

The RRC message may be for configuring the M TCI states, and the M TCI states are a subset of the N TCI states that are of the PDSCH and that are configured by using the RRC message shown in FIG. 2. The MAC CE may be for activating one of the M TCI states, and the activated TCI state is for receiving the PDCCH.

As shown in Table 1, beam information (or a QCL message) of the CSI-RS may alternatively be indicated by the RRC message. For example, a TCI state of the CSI-RS is configured by the RRC message, and the TCI state is a subset of the N TCI states that are of the PDSCH and that are configured by using the RRC message shown in FIG. 2.

Still as shown in Table 1, beam information (or spatial relation information) of the PUCCH may alternatively be indicated by two levels of signaling: the RRC message and the MAC CE. The RRC message may be for configuring the N spatial relations, the MAC CE may be for activating one of the N spatial relations, and the spatial relation is for sending the PUCCH.

In addition, the beam information of the PUCCH may alternatively be indicated by the RRC message.

Still as shown in Table 1, beam information (or spatial relation information) of the SRS may be indicated by two level of signaling: the RRC message and the MAC CE, or beam information of the SRS may be indicated by the RRC message.

SRSs may be classified into the periodic SRS, the semi-periodic SRS, and the aperiodic SRS.

For the periodic SRS, the RRC messages may be for configuring one spatial relation.

For the semi-periodic SRS, the RRC message or the MAC CE may indicate to configure one spatial relation.

For the aperiodic SRS, the RRC message or the MAC CE may indicate to configure one spatial relation.

In addition, as shown in Table 1, a spatial parameter may be indicated by the SRI field in the DCI, to indicate beam information (or spatial relation information) of the PUSCH.

(6) Component carrier (component carrier, CC):

The component carrier may also be referred to as a component carrier, a component carrier, a component carrier, or the like. Each carrier in multi-carrier aggregation may be referred to as the "CC". A terminal device may receive data on a plurality of CCs. Each carrier consists of one or more physical resource blocks (physical resource blocks, PRBs). There may be a corresponding PDCCH on each carrier, where the PDCCH is for scheduling a PDSCH on the respective CC. Alternatively, there may be no PDCCH on some carries. In this case, cross-carrier scheduling (cross-carrier scheduling) may be performed on the carriers.

Cross-carrier scheduling: A network device sends a PDCCH on one CC to schedule data transmission on another CC, that is, communicates a PDSCH on the another CC or communicates a PUSCH on the another CC. More specifically, the network device may send the PDCCH in a BWP on the CC, to schedule transmission of the PDSCH or the PUSCH in a BWP on the another CC. That is, a control channel is communicated on the CC, and a corresponding data channel is communicated on the another CC.

(7) Antenna port (antenna port):

The antenna port may also be referred to as a port for short, and is a transmit antenna identified by a receiving-end device or a transmit antenna that can be distinguished in space. One antenna port may be configured for each virtual antenna, the virtual antenna may be a weighted combination of a plurality of physical antennas, and each antenna port may correspond to one reference signal port.

(8) Code division multiplexing (code division multiplexing, CDM) group:

antenna port groups distinguished in a code division multiplexing manner, to be specific, different antenna ports occupy a same time-frequency resource, but correspond to different sequences (time-frequency masks).

(9) Bandwidth part:

In 5G new radio (new radio, NR), different terminal devices in a same cell may have different transmitting or receiving capabilities. Therefore, a system may configure a corresponding bandwidth for each terminal device. The part of bandwidth configured for the terminal device is referred to as the BWP, and the terminal device performs transmission in the BWP thereof. The BWP may be a group of consecutive frequency domain resources on a carrier, for example, physical resource blocks (physical resource blocks, PRBs). Frequency domain resources that may be occupied by different BWPs may partially overlap (overlap), or may not overlap each other. The frequency domain resources occupied by the different BWPs may have a same bandwidth or different bandwidths. This is not limited in this application. A minimum granularity of the BWP in frequency domain may be one PRB.

In a single-carrier scenario, one terminal device may have only one active BWP at a same moment, and the terminal device receives data/a reference signal or send data/a reference signal only in the active BWP (active BWP).

In this application, in a case applicable to a BWP scenario, a specified BWP may alternatively be a bandwidth set on a specific frequency, a set consisting of a plurality of resource blocks (resource blocks, RBs), or the like. This is not limited.

(10) Multi-site coordination (multi-TRP, M-TRP):

A plurality of sites (for example, TRPs) provide services for UE, to improve a cell edge rate and coverage capability. In the NR release (release) 16 standard, two M-TRP (multi-site coordination) transmission modes are defined: M-TRP scheduled by using a single piece of DCI and M-TRP scheduled by using dual pieces of DCI.

In the mode of the M-TRP scheduled by using the single piece of DCI, a base station performs indication by using a plurality of TCIs in the single piece of DCI in three manners: spatial division multiplexing (spatial division multiplexing, SDM), frequency division multiplexing (frequency division multiplexing, FDM), or time division multiplexing (time division multiplexing, TDM). In other words, PDSCHs communicated by the M-TRP may be communicated in any transmission mode in the SDM, the FDM, or the TDM. The plurality of TCIs correspond to different TRP indications, and each TCI may correspond to a PDSCH scheduled by one TRP. However, in a DCI scheduling manner, because the plurality of TCIs are included in one piece of DCI, the plurality of TCIs correspond to only one hybrid automatic repeat request (hybrid automatic repeat request, HARQ)-acknowledgement (acknowledgement, ACK) (HARQ-ACK). It should be understood that, in this application, the HARQ-ACK includes a HARQ ACK or a HARQ negative acknowledgement (negative acknowledgement, NACK) sent by the UE based on the DCI of the base station. The DCI may indicate the HARQ ACK or the HARQ NACK (for example, indicate a time-frequency resource), and the HARQ-ACK may be carried on a PUCCH.

In the mode of the M-TRP scheduled by using the dual pieces of DCI, M-TRP transmission is scheduled by using two pieces of DCI. The two pieces of DCI may respectively carry different TCIs, and respectively correspond to PDSCHs scheduled by different TRPs. In addition, in the dual-DCI mode, each PDSCH corresponds to one HARQ-ACK, and a plurality of HARQ-ACK feedbacks may be jointly encoded or independently encoded.

(11) Unified TCI (unified TCI):

In the NR R17 standard, to resolve problems such as large beam indication signaling overheads and slow beam switching in a mobility scenario, a manner of indication by the unified TCI is standardized. A main difference between the unified TCI and a TCI lies in an application range and/or application time. That the unified TCI and the TCI have different application ranges means that each unified TCI (or a TCI state corresponding to the unified TCI) (simultaneously) indicates spatial parameters for at least two types of signals/channels. In addition, the unified TCI is applicable within a time range, and there is application time. In an extension solution, the unified TCI may alternatively be a newly defined TCI type, and the application range and/or the application time of the unified TCI are/is different from an application range and/or application time of the TCI.

An indication procedure of a PDSCH is used as an example. When beam information of the PDSCH is indicated by the unified TCI, a possible implementation includes the following steps.

Step 1: A higher layer indicates a unified TCI configuration: A plurality of TCI states configured by a base station by using an RRC message are used as a unified TCI state pool (unified TCI state pool), and/or a base station may indicate by using an RRC message, at least one current TCI state includes the unified TCI if the at least one TCI state simultaneously indicates spatial parameters for at least two types of signals/channels.

Step 2: Activate N TCI states in the unified TCI state pool by using a MAC CE.

Step 3: Indicate one of the N unified TCIs by n bits in DCI, where n and N are positive integers.

Step 4: A terminal device determines an application range and application time of the TCI state.

The application range includes a plurality of signals/channels, for example, includes the PDSCH. The application time is application time at which the unified TCI corresponds to the foregoing application range. UE or the base station may communicate, within the application time by using a spatial parameter indicated by the unified TCI, the signals/channels within the application range, for example, communicate the PDSCH.

Currently, the unified TCI may indicate spatial parameters used for a plurality of signal/channel types. In addition, spatial parameters indicated by a plurality of unified TCIs may be applicable to one type of signal/channel. Therefore, it is difficult for the UE and the base station to accurately determine a spatial parameter used for a to-be-communicated signal/channel. Consequently, communication reliability is reduced.

To appropriately determine, when the TCI state is indicated by the unified TCI, the spatial parameter used for the signal/channel, to improve the communication reliability, embodiments of this application provide a communication method. The method may be implemented by the terminal device (for example, the UE) and a network device (for example, an access network device such as the base station). The following uses the UE and the base station as an example to describe the communication method provided in embodiments of this application.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", "in other embodiments", and the like that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

As shown in FIG. 5, an example in which execution bodies are a terminal device and a network device is used. A communication method provided in an embodiment of this application may include the following steps.

S101: The network device sends first indication information, where the first indication information may indicate a first spatial parameter, or the first indication information may include a first spatial parameter.

Accordingly, the terminal device receives the first indication information.

The first indication information may include a unified TCI. The first spatial parameter may also be referred to as first spatial parameter information, and may include QCL information and/or spatial relation information for signal/channel transmission. For meanings of the QCL information and the spatial relation information, refer to the descriptions in this application. Details are not described herein again. In this application, a spatial parameter may alternatively be a TCI state, a TCI state identifier, and/or the like. For example, the first spatial parameter may include at least one of type A QCL information, type B QCL information, type C QCL information, or type D QCL information.

It should be understood that the first indication information may be included in DCI, an RRC message, or a MAC CE. For example, the first indication information is included in the MAC CE. The MAC CE may have the structure shown in FIG. 4.

For example, the first indication information may be (or be included or carried in) a target field in the DCI (which may be referred to as first DCI below), and the target field may be, for example, a TCI field or another field. For example, the target field is the TCI field. The TCI field may be for determining the TCI state. The TCI state may include a TCI state in a TCI state pool. It should be understood that the TCI state may be a unified TCI state. In other words, at least one TCI state in the TCI state is the unified TCI state. The TCI state pool may also be referred to as a unified TCI state pool.

It should further be understood that each TCI state in the TCI state pool may correspond to one spatial parameter. For example, the TCI state is represented by using the TCI state ID, and the TCI state pool may include TCI states whose TCI state IDs are a TCI state ID #1, a TCI state ID #2, ..., and a TCI state ID #N, where N is a positive integer not less than 2, and spatial parameters respectively corresponding to the TCI states whose TCI state IDs are the TCI state ID #1, the TCI state ID #2, ..., and TCI state ID #N are represented as a spatial parameter #1, a spatial parameter #2, ..., and a spatial parameter #N. For example, the spatial parameter is the QCL information. Any one of the spatial parameter #1, the spatial parameter #2, ..., and the spatial parameter #N may include the type A QCL information, the type B QCL information, the type C QCL information, or the type D QCL information. It should be understood that types of any two of the spatial parameter #1, the spatial parameter #2, ..., and the spatial parameter #N may be the same or different. For example, the spatial parameter #1 includes the type A QCL information, and the spatial parameter #2, the spatial parameter #3, and the spatial parameter #4 include the type D QCL information.

The following describes, by using an example in which the first indication information is the unified TCI, an indication manner in which the first indication information indicates the first spatial parameter. Specifically, the network device may send second information to the terminal device, where the second information may indicate that a plurality of TCI states are used as the unified TCI state pool and/or activated unified TCI states. The activated unified TCI state may be one or more unified TCI states in the unified TCI state pool. The first indication information may indicate one unified TCI in the unified TCI state pool and/or the active unified TCI states. For example, if the network device may indicate, by using a higher layer, that the plurality of TCI states are used as the unified TCI state pool, the second information may include the higher layer indication.

For example, if the network device indicates the unified TCI state pool to the terminal device by using the RRC message or the MAC CE, the second information may include the RRC message or the MAC CE. In an example, the RRC message or the MAC CE may be for configuring N unified TCI states (or N TCI states, where at least one TCI state is the unified TCI state), and includes, for example, configurations of the N unified TCI states. The configuration of the unified TCI state is, for example, spatial parameter information corresponding to the unified TCI state or signals/channels to which the unified TCI state is applicable. A set of the N unified TCI states is the unified TCI state pool. For a manner in which the network device configures the unified TCI state pool by using the RRC message or the MAC CE, refer to the descriptions of configuring the N TCI states by the network device by using the RRC message in FIG. 3 in this application. A difference lies in that an application range of each unified TCI state herein includes a plurality of signals/channels, but the TCI state in FIG. 3 is applicable to one type of channel PDSCH. In this example, the first indication information may be carried in the DCI, and indicates one unified TCI in the unified TCI state pool and/or the activated unified TCI states.

For another example, if the network device may further indicate K activated unified TCI states (or K TCI states, where at least one TCI state is the unified TCI state) in N unified TCI states by using the MAC CE on a basis that the network device configures the N unified TCI states (or N TCI states, where at least one TCI state is the unified TCI state) as the unified TCI state pool by using the RRC message, the second information may include the MAC CE, where K is a positive integer less than or equal to N. For a manner in which the network device configures the unified TCI state pool by using the RRC message, refer to the descriptions of configuring the N TCI states by the network device by using the RRC message in FIG. 3 in this application. A difference lies in that an application range of each unified TCI state herein includes a plurality of signals/channels, but the TCI state in FIG. 3 is applicable to one type of channel PDSCH. For a manner in which the network device indicates the K activated unified TCI states in the N unified TCI states by using the MAC CE, refer to the descriptions of activating K of the N TCI states by the network device by using the MAC CE in FIG. 3. In this example, the first indication information may be carried in the DCI, and indicates one unified TCI in the unified TCI state pool and/or the activated unified TCI states.

An application range of each unified TCI in a resource pool includes at least two types of signals/channels, an identifier (or an index) that the unified TCI may have, and/or indication information having the application range; and/or if the network device may indicate, by using the RRC message, that a current TCI state indicates spatial parameters for the at least two types of signals/channels, the second information may include information that is in the RRC message and that indicates the N unified TCIs. In addition, if the network device may further activate the N unified TCIs in the unified TCI state pool by using the MAC CE, the second information may include information that is in the MAC CE and that indicates the N unified TCIs. Further, in S101, the network device includes an indication of the unified TCI in the TCI field in the DCI, to indicate one of the N unified TCIs. For example, the first indication information includes n bits, and a value of the n bits indicates an identifier of one of the N unified TCIs, to indicate the unified TCI.

It should be understood that, different from the TCI state shown in Table 2, the TCI state in the unified TCI state pool may be another TCI state defined in a protocol. For example, the TCI state may be configured for each TRP. That is, unified TCI state pools corresponding to different TRPs may be different. Therefore, in an M-TRP scenario, a value of one DCI field may correspond to different TCI states in different unified TCI state pools. Therefore, respective spatial parameters for a plurality of TRPs may be implicitly indicated by TCI state configurations, to resolve beam configuration and indication problems in a case of the plurality of TRPs, and improve communication reliability in the multi-TRP scenario. For example, a unified TCI state pool #1 and a unified TCI state pool #2 may be respectively configured for a TRP #1 and a TRP #2, and one unified TCI state is indicated from each of the unified TCI state pool #1 and the unified TCI state pool #2 by indication information, so that the terminal device separately performs communication in the TRP #1 and the TRP #2 based on spatial parameters respectively corresponding to the plurality of unified TCI states.

Based on the first indication information in S101, the terminal device may communicate (including sending and/or receiving) a first type of signal/channel based on the first spatial parameter. In other words, the first spatial parameter may be for communicating the first type of signal/channel. In other words, an application range of the first spatial parameter includes the first type. In this application, the application range of the first spatial parameter is a type of a signal/channel that can be communicated by using the first spatial parameter. It should be understood that, in embodiments of this application, an application range of a spatial parameter may be replaced with an application range of indication information of the spatial parameter. For example, the application range of the first spatial parameter may be replaced with an application range of the first indication information.

It should be understood that the signal/channel in this application is a signal and/or a channel. For example, the signal/channel includes the signal or the channel. It should further be understood that, in this application, sending the channel means sending content such as information, data, signaling, or a message carried on the channel, and receiving the channel means receiving the content such as the information, the data, the signaling, or the message carried on the channel. Sending the channel may alternatively be replaced with performing sending through the channel, and receiving the channel may alternatively be replaced with performing receiving through the channel.

In embodiments of this application, the first type of signal may include at least one type of signal in an SRS, a CSI-RS, a PTRS, a DMRS, a TRS, or an SSB; and/or, the first type of channel may include at least one type of channel in a PUSCH, a PDSCH, a PDCCH, and a PUCCH. In other words, the first type of signal/channel may include at least two of the SRS, the CSI-RS, the PDSCH, the PDCCH, the PUSCH, the PUCCH, the PTRS, the DMRS, the TRS, or the SSB. For example, the first type of signal/channel includes at least two types of signals, for example, the SRS and the CSI-RS. For another example, the first type of signal/channel includes at least two types of channels, for example, the PDSCH and the PDCCH. For another example, the first type of signal/channel includes at least one type of signal and at least one type of channel, for example, includes the SRS and the PDSCH.

In other words, the first spatial parameter may be for communicating at least two of the SRS, the CSI-RS, the PDSCH, the PDCCH, the PUSCH, the PUCCH, the PTRS, the DMRS, the TRS, or the SSB between the terminal device and the network device. In other words, the application range of the first spatial parameter or the first indication information includes at least two of the SRS, the CSI-RS, the PDSCH, the PDCCH, the PUSCH, the PUCCH, the PTRS, the DMRS, the TRS, or the SSB, for example, includes the at least two types of signals (for example, the SRS and the CSI-RS), the at least two types of channels (for example, the PDSCH and the PDCCH), or the at least one type of signal and the at least one type of channel (for example, the SRS and the PDSCH). It may be understood that the terminal device and/or the network device may communicate the first type of signal based on the first spatial parameter. In other words, the terminal device and/or the network device may communicate at least two of the SRS, the CSI-RS, the PDSCH, the PDCCH, the PUSCH, the PUCCH, the PTRS, the DMRS, the TRS, or the SSB based on the first spatial parameter. In addition, the first type of signal/channel should not be understood as different signals/channels having a same type. The SRS is used as an example. The different signals/channels having the same type refer to two different SRSs. In other words, the first type of signal/channel is not the different signals/channels having the same type.

It should be understood that the foregoing first type of signal/channel may be predefined in the protocol, preset, or preconfigured in the terminal device or the network device. In addition, the first type of signal/channel may alternatively be indicated by the network device to the terminal device by using a message such as the RRC message or the MAC CE. For example, the network device may send first information to the terminal device. The first information may indicate that the first indication information (or the unified TCI) is applicable to the first type of signal/channel. That is, the first information is information indicating that the first indication information is applicable to the first type of signal/channel. In an example, the first information may carry information such as an index or an identifier of a signal/channel type, and may further carry an indication indicating whether the first indication information is applicable to the signal/channel, for example, 1-bit indication information. For example, the index or the identifier of the signal/channel type may indicate at least two types of signals/channels in the SRS, the CSI-RS, the PDSCH, the PDCCH, the PUSCH, the PUCCH, the PTRS, the DMRS, the TRS, or the SSB. The indication indicating whether the first indication information is applicable to the signal/channel (for example, an identifier or a switch indicating whether the unified TCI is applicable) may indicate whether the first indication information is applicable to at least two types of signals/channels. For example, an index or an identifier of each signal/channel type corresponds to the 1-bit indication information. For example, when a value of a 1-bit indication corresponding to a signal/channel is "1" (which may alternatively be "0"), it indicates that the first indication information is applicable to the signal/channel, or may indicate that the first type of signal/channel includes the signal/channel. If a value of the indication is "0" (which may alternatively be "1"), it indicates that the first indication information is not applicable to the signal/channel, or may indicate that the first type of signal/channel does not include the signal/channel.

In a possible example in which the first information indicates whether the first indication information is applicable to the signal/channel, the network device may indicate, to the terminal device by using one or more pieces of higher layer signaling such as the RRC message, the MAC CE, or the DCI, that the first indication information is applicable to the first type of signal/channel. Therefore, the first information may include one or more of the RRC message, the MAC CE, or the DCI. In other words, the first information may be carried in one or more of the RRC message, the MAC CE, or the DCI. Specifically, the first information may include an identifier or a switch that is in configuration information of the at least two types of signals/channels in the SRS, the CSI-RS, the PDSCH, the PDCCH, the PUSCH, the PUCCH, the PTRS, the DMRS, the TRS, or the SSB and that indicates whether the unified TCI is applicable, and the configuration information of the two types of signals/channels may be carried in the RRC message, the MAC CE, or the DCI. For example, the signal/channel includes a periodic SRS. Configuration information of the periodic SRS may be included in the RRC message or the MAC CE. The first information may include a 1-bit switch in the configuration information. When a value of the 1-bit switch is "1" (which may alternatively be "0"), it indicates that the first indication information is applicable to the periodic SRS, or may indicate that the first type of signal/channel includes the periodic SRS or includes the SRS. If a value of the indication is "0" (which may alternatively be "1"), it indicates that the first indication information is not applicable to the periodic SRS, or may indicate that the first type of signal/channel does not include the periodic SRS or does not include the SRS. In addition, for an aperiodic SRS, configuration information may be carried in the DCI. For implementation of a manner of indicating, by the first information, whether the first indication information is applicable to the aperiodic SRS, refer to the example of the periodic SRS. Details are not described again. In addition, for implementation of a manner of indicating, by the first information, whether the first indication information is applicable to another signal/channel, refer to the foregoing example.

Accordingly, if the terminal device receives the first information, the terminal device determines the first type based on the information, or the terminal device performs the communication method in this application after receiving the information. If the terminal device does not receive the first information, the terminal device may not perform the communication method in this application, or in other words, the terminal device does not support determining that is of the spatial parameter for the first type of signal/channel and that is performed based on the first indication information.

For example, the first indication information is the unified TCI. If the network device may send, to the terminal device, indication information indicating that the unified TCI is applicable to the SRS (including the periodic SRS or the aperiodic SRS) or the CSI-RS (including a periodic CSI-RS or an aperiodic CSI-RS), the first type may include the SRS and/or the CSI-RS. The indication information may be carried in an RRC message or a MAC CE for configuring the SRS and/or the CSI-RS. It should be understood that, even if the indication information indicating that the unified TCI is applicable to the SRS or the CSI-RS and/or reference signal resource information of a first signal are/is carried in the RRC message or the MAC CE, the terminal device still needs to communicate, based on descriptions about application time of the first indication information in this application after the application time of the first indication information arrives, the SRS and/or the CSI-RS based on the first spatial parameter indicated by the first indication information. As described in this application, the reference signal resource information of the first signal may indicate or be for configuring the first signal. For example, the reference signal resource information of the first signal may include a first index corresponding to indication information (including the first indication information) that is of a spatial parameter and that is applicable to the first signal. For details, refer to descriptions of the first index in S 102. The application time of the first indication information is further described subsequently in this application.

It should be understood that, when the first indication information is included in the DCI, the first type or a type of the first signal/channel may include the aperiodic SRS and/or the aperiodic CSI-RS.

In another example of determining the application range of the first spatial parameter, a condition for the first type to include some signal/channel types may be preset. When the condition is satisfied, the first type includes the signal/channel types. For example, when the first indication information is included in the DCI (for ease of description in this application, the DCI for carrying the first indication information may be referred to as the first DCI), and a feedback mode (which is also referred to as a HARQ feedback mode, a feedback manner, or the like) of a HARQ-ACK indicated by the first DCI is an independent feedback, the first type includes the PUCCH. If a feedback mode of a HARQ-ACK indicated by first DCI is not an independent feedback, for example, is a joint feedback, the first type does not include the PUCCH. The independent feedback means that the HARQ-ACK indicated by the first DCI and a HARQ-ACK indicated by other DCI do not use a same time-frequency resource. For example, the terminal device receives a plurality of pieces of DCI including the first DCI, and the terminal device respectively sends, for all DCI on different time-frequency resources, HARQ-ACKs indicated by different pieces of DCI. The joint feedback means that the HARQ-ACK indicated by the first DCI and the HARQ-ACK indicated by the other DCI use the same time-frequency resource.

Optionally, the first indication information in this application may be carried in the RRC message, the MAC CE, or the DCI. In other words, any type of signal/channel in the at least two types of signals/channels included in the first type is indicated by the RRC signaling or the MAC CE signaling.

For example, the RRC message and/or the MAC CE may include indication information (which may include indication information of one or more spatial parameters, where the indication information may include the first indication information) of a spatial parameter used for the any type of signal/channel in the at least two types of signals/channels included in the first type and/or a first index (for example, a CORESET resource pool index) corresponding to the indication information. The periodic SRS or the periodic CSI-RS is used as an example. If an RRC message or a MAC CE for configuring the periodic SRS or the periodic CSI-RS indicates a CORESET resource pool index corresponding to the first indication information, optionally, when the terminal device receives the first indication information, and it is determined that a CORESET resource pool index of the first DCI for carrying the first indication information is the same as the CORESET resource pool index corresponding to the first indication information and indicated by the RRC message or the MAC CE, the terminal device may communicate the periodic SRS or the periodic CSI-RS based on the first spatial parameter indicated by the first indication information. The first indication information may be carried in the DCI. Therefore, the application time of the first indication information may be determined based on the HARQ-ACK indicated by the DCI.

In an example, when the first indication information is carried in the first DCI, the type of the first signal/channel may include at least one of the SRS, the CSI-RS, the PDSCH, the PDCCH, the PUSCH, the PUCCH, the PTRS, the DMRS, the TRS, or the SSB. Optionally, the first indication information may be carried in the TCI field in the DCI.

S102: The terminal device and/or the network device communicate/communicates the first signal/channel based on the first spatial parameter.

A first index of the first signal/channel is the same as or associated with a first index of the first indication information. In other words, when the first index of the first signal/channel is the same as or associated with the first index of the first indication information, the first signal/channel is communicated between the terminal device and the network device based on the first spatial parameter.

Optionally, the type of the first signal/channel is the first type.

In this application, the type of the first signal/channel may be included in the application range of the first spatial parameter. Alternatively, it may be understood that the type of the first signal/channel is the type of the signal/channel included in the application range of the first spatial parameter. For the type of the signal/channel included in the application range of the first spatial parameter, refer to the descriptions in S101. Details are not described herein again. For example, the first signal/channel includes at least one of the SRS, the CSI-RS, the PDSCH, the PDCCH, the PUSCH, the PUCCH, the PTRS, the DMRS, the TRS, or the SSB.

Therefore, when the type of the first signal/channel is included in the application range of the first spatial parameter, the terminal device and the network device may communicate the first signal/channel based on the first spatial parameter.

In an example, in S102, the first index may include a CORESET resource pool (CORESET pool) index. For the first signal, the CORESET resource pool index may be included in resource indication information of the first signal, the CORESET resource pool index may be determined based on indication information included in resource indication information, or the like. For the first indication information, if the first indication information is carried in the DCI, the first index corresponding to the first indication information is a CORESET resource pool index of the DCI.

In other words, in this application, the terminal device and/or the network device may determine, based on the CORESET resource pool index corresponding to the first signal and the CORESET resource pool index corresponding to the first indication information, whether to communicate the first signal/channel by using the first spatial parameter. An index of the resource indication information may include a control resource set group index, for example, a CORESET resource pool (CORESET pool) index.

In an example of the first index, the first signal/channel is scheduled (or indicated) by using DCI (referred to as second DCI below), and the first indication information is included in the first DCI. If a CORESET resource pool index of the second DCI is the same as the CORESET resource pool index of the first DCI, the terminal device and the network device communicate the first signal/channel based on the first spatial parameter in S 102. Alternatively, if a CORESET resource pool index of the second DCI is associated with the CORESET resource pool index of the first DCI, for example, indicated CORESET resource pools are the same although the two CORESET resource pool indexes are different, the terminal device and the network device communicate the first signal/channel based on the first spatial parameter in S102.

In this example, the first type may include at least one of the SRS, the CSI-RS, the PDSCH, the PDCCH, the PUSCH, the PUCCH, the PTRS, the DMRS, the TRS, or the SSB. In other words, the first signal/channel may include at least one of the SRS, the CSI-RS, the PDSCH, the PDCCH, the PUSCH, the PUCCH, the PTRS, the DMRS, the TRS, or the SSB.

In another example of the first index, if the first signal includes the periodic SRS or the periodic CSI-RS, the first signal may be indicated (or configured) by using the RRC message or the MAC CE. In this case, the reference signal resource information of the first signal may be included in the RRC message or the MAC CE. The periodic SRS is used as an example. The reference signal resource information may be the configuration information of the periodic SRS in the RRC message or the MAC CE. Optionally, in this case, the first index corresponding to the first signal may include a CORESET resource pool index in the reference signal resource information of the first signal, or include a CORESET resource pool index determined based on indication information in the reference signal resource information. There may be a correspondence between the indication information in the reference signal resource information and the CORESET resource pool index. For example, when the indication information is "0", it indicates that the CORESET resource pool index is an index #1. This is not specifically limited in this application. The correspondence between the indication information and the CORESET resource pool index may be defined in the protocol, predefined, or preconfigured in the terminal device and the network device, may be indicated by the network device to the terminal device, or may be indicated by another network device.

In this example, if the CORESET resource pool index included in the reference signal resource information of the first signal or the CORESET resource pool index determined based on the indication information included in the reference signal resource information of the first signal is the same as the CORESET resource pool index corresponding to the first indication information, the terminal device may communicate the first signal based on the first spatial parameter indicated by the first indication information.

For example, if the terminal device receives the RRC message, where the RRC message includes the configuration information of the periodic SRS, that is, the first signal is the periodic SRS, the configuration information of the periodic SRS may be considered as the reference signal resource information corresponding to the first signal. When a CORESET resource pool index included in the configuration information of the periodic SRS is an index #1, and the CORESET resource pool index of the DCI for carrying the first indication information in S101 is the index #1, the first index corresponding to the first signal is the same as the first index corresponding to the first indication information, and the periodic SRS may be communicated between the terminal device and the network device by using the first spatial parameter indicated by the first indication information.

For another example, when an identifier included in the configuration information of the periodic SRS corresponds to a CORESET resource pool index #1, and the CORESET resource pool index of the DCI for carrying the first indication information in S101 is the index #1, that is, the CORESET resource pool index corresponding to the first indication information is the index #1, the first index corresponding to the first signal is the same as the CORESET resource pool corresponding to the first indication information, and the terminal device may communicate the periodic SRS with the network device by using the first spatial parameter.

When the terminal device determines that the reference signal resource information of the first signal/channel includes the identifier or a field, and reference signal resource information corresponding to the first indication information includes the identifier or the field, the terminal device may communicate the first signal/channel by using QCL information corresponding to the first indication information.

Based on the procedure shown in FIG. 5, the terminal device may receive the first indication information, and communicate, when the first index corresponding to the first indication information is the same as the first index corresponding to the first signal, the first signal based on the first spatial parameter indicated by the first indication information. The first spatial parameter may be for communicating at least two types of signals/channels. According to the method, when the first spatial parameter may be for the transmission of the at least two types of signals/channels, a spatial parameter used for a to-be-sent signal/channel can be accurately determined, and communication reliability can be improved.

Optionally, in S102, the terminal device and the network device may communicate the first signal/channel based on the first spatial parameter after application time of the first spatial parameter or the first indication information. In other words, sending time of the first signal/channel is after the application time of the first spatial parameter or the first indication information. For example, the terminal device performs S103 after the application time of the first indication information or the first spatial parameter. In other words, the terminal device may communicate the first sequence number/channel based on the first spatial parameter after the application time of the first spatial parameter arrives. It should be understood that, in embodiments of this application, application time of a spatial parameter may be replaced with application time of indication information of the spatial parameter. For example, the application time of the first spatial parameter may be replaced with the application time of the first indication information.

In this application, the application time of the first spatial parameter is time at which the first spatial parameter starts to be applicable or beam application time (beam application time). After the application time, the terminal device and/or the network device may communicate the first type of signal/channel (including but not limited to the first signal/channel) based on the first spatial parameter.

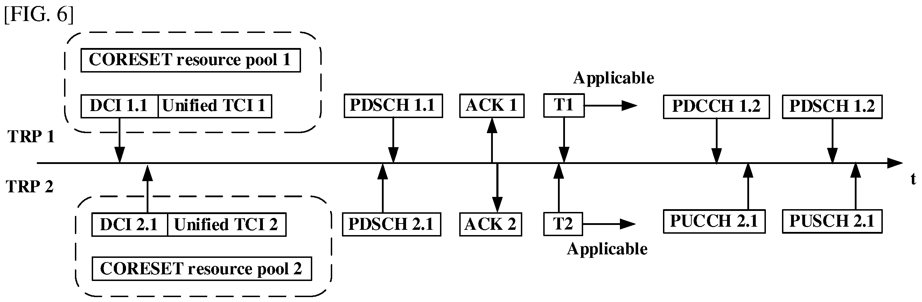

FIG. 6 is used as an example. The first indication information includes a unified TCI 1 (the unified TCI 1 is for representation in FIG. 6), where T1 is application time of the unified TCI 1. If the terminal device needs to receive a PDSCH 1.1 before a moment T1, the terminal device may not receive the PDSCH 1.1 based on QCL information indicated by the unified TCI 1. In addition, as shown in FIG. 6, sending time of the PDCCH 1.2 is after T1, and the terminal device may receive the PDSCH 1.2 based on the QCL information indicated by the unified TCI 1.

Optionally, in embodiments of this application, the application time of the first indication information or the application time of the first spatial parameter is after the HARQ-ACK indicated by the first DCI for carrying the first indication information. That is, the moment T1 is after the HARQ-ACK. In other words, the moment T1 is not earlier than sending time of the HARQ-ACK. According to this design, it can be ensured that the terminal device performs signal/channel transmission based on the first indication information after completing parsing of the first indication information. In addition, after receiving the HARQ-ACK from the terminal device, the network device can also learn that the terminal device may perform, after sending the HARQ-ACK, signal/channel transmission by using the spatial parameter indicated by the first indication information.

Optionally, the application time of the first indication information is determined based on the sending time of the HARQ-ACK indicated by the first DCI.

In a possible example, the application time of the first indication information is after k time units after the sending time of the HARQ-ACK indicated by the first DCI, where k is a positive integer. In this application, a time unit may include a slot, a symbol, a plurality of slots, a plurality of symbols, or a combination of at least one slot and at least one symbol.

In another possible example, the application time of the first indication information is after specified time duration after the time at which the terminal device sends the HARQ-ACK indicated by the first DCI. For example, the specified time duration may be time duration for QCL (time duration for QCL) or another information element (information element, IE) indication. The time duration for the QCL may be included in terminal device capability information reported by the terminal device to the network device. Therefore, the terminal device can report the specified time duration, so that the terminal device and the network device can negotiate and determine the specified time duration.

FIG. 6 is still used as an example. The application time of the first indication is T1, and T1 is after k time units or specified time duration after sending time of a HARQ-ACK (an ACK 1 shown in FIG. 6) indicated by DCI 1.1. The k time units or the specified time duration may be indicated by the network device by using the RRC message, the MAC CE, or the DCI, or may be predefined in the protocol, preset, or preconfigured. This is not specifically limited in this application.

It may be understood that, when the at least two types of signals/channels included in the first type or the first signal/channel includes an uplink signal/channel, S102 may include S103 and S104 below.

S103: The terminal device sends the first signal/channel based on the first spatial parameter.

For the first spatial parameter, refer to the descriptions in S101. For example, when the at least two types of signals/channels included in the first type or the first signal/channel includes the uplink signal/channel, the first spatial parameter may include the QCL information, where the QCL information may indicate a spatial related parameter (which is also referred to as a spatial related feature) of the uplink signal. Alternatively, when the at least two types of signals include a downlink signal, the first spatial parameter may include TCI information. Alternatively, when the at least two types of signals include a downlink signal, the first spatial parameter may include TCI state information.

In a possible example, when two types of signals/channels included in the first type or the first signal/channel includes the uplink signal/channel, the first spatial parameter information is the type D QCL information. The uplink signal/channel may include at least one of the PUCCH, the PUSCH, the SRS, the PTRS, the DMRS, or the like. For example, when the uplink signal is the SRS, the spatial parameter information is the type D QCL information. For the type D QCL information, refer to the descriptions in this application. Details are not described herein again.

Optionally, the terminal device may perform S103 after the application time of the first indication information or the first spatial parameter.

It may be understood that, that the terminal device sends the first signal/channel based on the first spatial parameter may mean that the terminal device sends the first signal/channel by using the first spatial parameter.

S104: The network device receives the first signal/channel based on the first spatial parameter.

Optionally, the network device may perform S104 after the application time of the first indication information or the first spatial parameter.

It may be understood that, that the network device receives the first signal/channel based on the first spatial parameter may mean that the network device receives the first signal/channel by using the first spatial parameter.

In addition, it may be understood that, when the first signal/channel includes a downlink signal/channel, S102 may include S105 and S106 below.

S105: The network device sends the first signal/channel based on the first spatial parameter.

For the first spatial parameter, refer to the descriptions in S101. For example, when the at least two types of signals/channels included in the first type or the first signal/channel includes an uplink signal/channel, the first spatial parameter may include the QCL information, where the QCL information may indicate a spatial related parameter (which is also referred to as a spatial related feature) of the downlink signal. Alternatively, when the at least two types of signals include the downlink signal, the first spatial parameter may include TCI information. Alternatively, when the at least two types of signals include the downlink signal, the first spatial parameter may include TCI state information.

It should be understood that the downlink signal/channel may include at least one of the PDCCH, the PDSCH, the TRS, the CSI-RS, the PTRS, the DMRS, the SSB, or the like.

Optionally, the network device may perform S105 after the application time of the first indication information or the first spatial parameter.

It may be understood that, that the network device sends the first signal/channel based on the first spatial parameter may mean that the terminal device sends the first signal/channel by using the first spatial parameter.

S106: The terminal device receives the first signal/channel based on the first spatial parameter.

Optionally, the network device may perform S106 after the application time of the first indication information or the first spatial parameter.

It may be understood that, that the network device receives the first signal/channel based on the first spatial parameter may mean that the network device receives the first signal/channel by using the first spatial parameter.

Optionally, based on the procedure shown in FIG. 6, the terminal device may receive second indication information in addition to the first indication information shown in S101, and communicate a second signal/channel based on the second indication information. A second index corresponding to the second signal/channel is the same as or associated with a second index corresponding to the second indication information. The second indication information may indicate a second spatial parameter. Similar to the first indication information, the second indication information may be a unified TCI. The second spatial parameter may include QCL information and/or spatial relation information for signal/channel transmission. The second spatial parameter may be for communicating a second type of signal/channel, and the second type of signal/channel (which is also referred to as an application range of the second spatial parameter or the second indication information) may include at least two of the SRS, the CSI-RS, the PDSCH, the PDCCH, the PUSCH, the PUCCH, the PTRS, the DMRS, the TRS, or the SSB. The second type of signal/channel may include a type of the second signal/channel.

It should be understood that, for the second indication information, the second spatial parameter, the second type, and the second signal/channel herein, respectively refer to the descriptions of the first indication information, the second spatial parameter, the second type, and the second signal/channel in this application. For example, a manner in which the second indication information indicates the second spatial parameter is similar to or the same as the manner in which the first indication information indicates the first spatial parameter, a manner of determining the application range or application time of the second indication information may be similar to or the same as the manner of determining the application range or the application time of the first indication information, the second index of the second indication information is similar to or the same as the first index of the first indication information, and the second index of the second signal/channel is the same as or similar to the first index of the first signal/channel. Therefore, for the second index of the second indication information, refer to the descriptions of the second index of the first indication information in this application; and for the second index of the second signal/channel, refer to the descriptions of the first index of the first signal/channel in this application. Details are not described again. The first type of signal/channel may be the same as or different from the second type of signal/channel. For example, the first type of signal/channel may have an intersection with the second type of signal/channel, or the first type of signal/channel may have no intersection with the second type of signal/channel. This is not specifically required in this application.

It should be understood that the first indication information and the second indication information may be carried in different DCI. In a possible implementation, the first indication information may indicate the unified TCI in the unified TCI state pool and/or the activated unified TCI states, and the second indication information may indicate another unified TCI in a same unified TCI state pool and/or same activated unified TCI states, where the two unified TCIs may correspond to different spatial parameters. For a manner in which the second indication information indicates the unified TCI in the unified TCI state pool and/or the activated unified TCI states, refer to the descriptions of indicating the unified TCI in the unified TCI state pool and/or the activated unified TCI states by the first indication information in S101.

Optionally, the first spatial parameter and the second spatial parameter may correspond to different TRPs. In other words, the first signal/channel and the second signal/channel are respectively signals/channels communicated between the UE and the different TRPs. In other words, the first indication information and the second indication information are respectively from the different TRPs. Therefore, in this solution, a spatial parameter used for signal/channel transmission between the UE and each TRP can be accurately determined in the M-TRP scenario.

When the terminal device separately receives the first indication information and the second indication information, and an intersection of the first type corresponding to the first indication information and the second type corresponding to the second indication information includes at least one type of signal/channel, the terminal device and the network device may separately communicate the type of signal/channel by using the first spatial parameter and the second spatial parameter. Consequently, the transmission fails. To improve the communication reliability in this scenario, the terminal device and/or the network device in this application may determining one piece of indication information in the first indication information and the second indication information (or similarly, more indication information whose application ranges include a type of a to-be-communicated signal/channel may further be included, which is not specifically limited) based on a first index corresponding to the signal/channel, and communicate the signal/channel based on spatial parameter indicated by the indication information, to avoid a case in which the terminal device and the network device communicate the signal/channel by using different spatial parameters, and improve the communication reliability.

FIG. 6 is still used as an example. The terminal device receives the DCI 1.1 and DCI 2.1, where the DCI 1.1 includes the unified TCI 1, and the DCI 2.1 includes a unified TCI 2 (the unified TCI 2 is for representation in FIG. 6). A CORESET resource pool corresponding to the DCI 1.1 is a CORESET resource pool 1. In other words, a CORESET resource pool index corresponding to the DCI 1.1 is 1. A CORESET resource pool corresponding to the DCI 2.1 is a CORESET resource pool 2. In other words, a CORESET resource pool index corresponding to the DCI 2.1 is 2. It is assumed that the first indication information is the unified TCI 1 and that the second indication information is the unified TCI 2. When the terminal device needs to communicate any one of the PDCCH 1.2, the PDSCH 1.2, a PUCCH 2.1, or a PUSCH 2.1 shown in FIG. 6, it may be determined, based on a CORESET resource pool index of a signal/channel that needs to be sent, to perform transmission by using a spatial parameter indicated by the unified TCI 1 or the unified TCI 2.

For example, when the terminal device needs to receive the PDCCH 1.2 and/or the PDSCH 1.2, it may be determined, based on a CORESET resource pool index of DCI (namely, the second DCI) for scheduling the PDCCH 1.2 and/or the PDSCH 1.2, to receive the PUCCH 2.1 and/or the PUSCH 2.1 based on the unified TCI 1 and/or the unified TCI 2.

If the CORESET resource pool of the second DCI for scheduling the PDCCH 1.2 is the CORESET resource pool 1, in other words, the CORESET resource pool index corresponding to the second DCI is 1, that is, the resource pool index of the second DCI is the same as the resource pool index of the DCI 1.1, the terminal device may receive the PDCCH 1.2 based on the unified TCI 1. Specifically, the terminal device may receive the PDCCH 1.2 based on the QCL information corresponding to the unified TCI 1.

Similarly, if the CORESET resource pool of the second DCI for scheduling the PDSCH 1.2 is the CORESET resource pool 1, in other words, the CORESET resource pool index corresponding to the second DCI is 1, that is, the resource pool index of the second DCI is the same as the resource pool index of the DCI 1.1, the terminal device may receive the PDSCH 1.2 based on the unified TCI 1. Specifically, the terminal device may receive the PDSCH 1.2 based on the QCL information corresponding to the unified TCI 1.

In addition, if the CORESET resource pool of the second DCI for scheduling the PUCCH 2.1 is the CORESET resource pool 2, in other words, the CORESET resource pool index corresponding to the second DCI is 2, that is, the resource pool index of the second DCI is the same as the resource pool index of the DCI 2.1, the terminal device may send the PUCCH 2.1 based on the unified TCI 2. Specifically, the terminal device may send the PUCCH 2.1 based on QCL information corresponding to the unified TCI 2.

Similarly, if the CORESET resource pool of the second DCI for scheduling the PUSCH 2.1 is the CORESET resource pool 2, in other words, the CORESET resource pool index corresponding to the second DCI is 2, that is, the resource pool index of the second DCI is the same as the resource pool index of the DCI 2.1, the terminal device may send the PUSCH 2.1 based on the unified TCI 2. Specifically, the terminal device may send the PUSCH 2.1 based on the QCL information corresponding to the unified TCI 2.

It should be understood that transmission time of the PUCCH 2.1 and the PUSCH 2.1 in FIG. 6 are after application time of the unified TCI 2 (that is, T2 shown in FIG. 6). For a manner of determining T2, refer to the descriptions of the application time of the first indication information in this application. For example, T2 is located after an ACK 2 shown in FIG. 6, and the ACK2 is a HARQ-ACK indicated by the DCI 2.1. In addition, the PDSCH 2.1 shown in FIG. 6 is before T2. Therefore, the PDSCH 2.1 may be communicated by using a spatial parameter other than the second spatial parameter. This is not specifically required in this application.

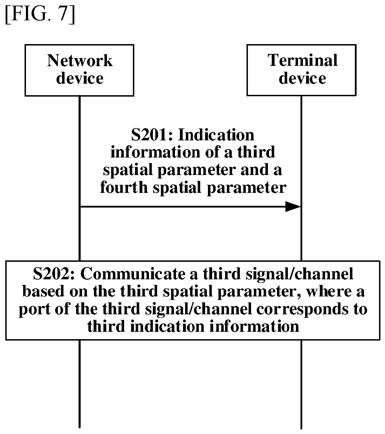

As shown in FIG. 7, an embodiment of this application provides another communication method. A difference between the method shown in FIG. 7 and the method shown in FIG. 5 lies in that, in the method shown in FIG. 7, a plurality of pieces of spatial parameter indication information may be indicated in a same piece of DCI, where in the plurality of pieces of spatial parameter indication information, at least one piece of spatial parameter indication information is a unified TCI. In the method shown in FIG. 7, the plurality of pieces of spatial parameter indication information may correspond to different CDM groups. When a terminal device and/or a network device perform/performs signal/channel transmission through a port in one of the CDM groups, a spatial parameter indicated by spatial parameter indication information corresponding to a CDM group to which the port belongs is used.

As shown in FIG. 7, the method may include the following steps.

S201: The network device sends indication information of a third spatial parameter and a fourth spatial parameter to the terminal device.

Alternatively, S201 may be replaced with that the network device sends third indication information and fourth indication information to the terminal device.

The third indication information may indicate the third spatial parameter, or the third indication information may include the third spatial parameter; and the fourth indication information may indicate the fourth spatial parameter, or the fourth indication information may include the fourth spatial parameter.

In other words, the indication information of the third spatial parameter and the fourth spatial parameter includes indication information of the third spatial parameter and indication information of the third spatial parameter.

The third spatial parameter is for communicating a third type of signal/channel, the fourth spatial parameter is for communicating a fourth type of signal/channel, and the third type of signal/channel and/or the fourth type of signal/channel include/includes at least two types of signals/channels in an SRS, a CSI-RS, a PDSCH, a PDCCH, a PUSCH, a PUCCH, a PTRS, a DMRS, a TRS, or an SSB. The third type of signal/channel may be the same as or different from the fourth type of signal/channel. For example, the third type of signal/channel may have an intersection with the fourth type of signal/channel, or the third type of signal/channel may have no intersection with the fourth type of signal/channel. This is not specifically required in this application.

Accordingly, the terminal device receives the third indication information and the third indication information.

Optionally, the third indication information and the fourth indication information are included in third DCI, or the indication information of the third spatial parameter and the fourth spatial parameter is included in the third DCI. In other words, the third indication information and the fourth indication information may be included in a same piece of DCI.

In a possible implementation, the third indication information may indicate a unified TCI #A in a unified TCI state pool and/or activated unified TCI states, and the fourth indication information may indicate a unified TCI #B in a same unified TCI state pool and/or same activated unified TCI states, and the unified TCI #A and the unified TCI #B may correspond to a same spatial parameter or different spatial parameters. For a manner in which the third indication information and the fourth indication information indicate the unified TCIs in the unified TCI state pool and/or the activated unified TCI states, refer to the descriptions of indicating the unified TCI in the unified TCI state pool and/or the activated unified TCI states by the first indication information in S101. Optionally, the third indication information and/or the fourth indication information are/is unified TCIs/a unified TCI. For example, the third indication information is an index of the unified TCI #A in the unified TCI state pool and/or the activated unified TCI states, and the fourth indication information is an index of the unified TCI #B in the unified TCI state pool and/or the activated unified TCI states.

In another possible implementation, if the network device sends the indication information of the third spatial parameter and the fourth spatial parameter to the terminal device, that is, the third spatial parameter and the fourth spatial parameter are indicated by a same piece of indication information, the indication information may indicate the third spatial parameter and the fourth spatial parameter from different unified TCI state pools or different activated unified TCI states. For example, the network device may configure, for the terminal device by using an RRC message, a MAC CE, or DCI, a plurality of unified TCI state pools including a unified TCI state pool #1 and a unified TCI state pool #2. The network device may further send the indication information of the third spatial parameter and the fourth spatial parameter to the terminal device by using the DCI, where the indication information may indicate the unified TCI #A (corresponding to the third spatial parameter) from the unified TCI state pool #1, and may indicate the unified TCI #B (corresponding to the fourth spatial parameter) from the unified TCI state pool #2. For example, the indication information is a unified TCI index, and the unified TCI index includes an index of the unified TCI #A in the unified TCI state pool #1 and an index of the unified TCI #B in the unified TCI state pool #2. For example, the indication information of the third spatial parameter and the fourth spatial parameter is the unified TCI index or a unified TCI indication. In this example, the unified TCI #A may be used as the third indication information, and the unified TCI #B may be used as the fourth indication information.

In addition, in a procedure shown in FIG. 7, it is not excluded that the third spatial parameter and the fourth spatial parameter are configured for the terminal device by using one field (for example, a TCI field) in first DCI. In this case, S201 may be replaced with that the network device sends the indication information of the third spatial parameter and/or the fourth spatial parameter to the terminal device. Descriptions of the third spatial parameter and the fourth spatial parameter are the same as the descriptions in S201. For example, the network device may configure different unified TCI state pools for different TRPs. That is, unified TCI state pools corresponding to the different TRPs may be different. Therefore, in an M-TRP scenario, a value of one DCI field may correspond to different TCI states in different unified TCI state pools. Therefore, in an example of the procedure shown in FIG. 7, the network device may respectively indicate, by using the value of the TCI field in the DCI, the third spatial parameter and the fourth spatial parameter from the unified TCI state pools corresponding to the different TRPs.

When the third spatial parameter and the fourth spatial parameter are indicated by unified TCIs, the network device may configure at least two unified TCI state pools for the terminal device by using the RRC message or the MAC CE. The at least two unified TCI state pools each may include a plurality of unified TCI states, each unified TCI may correspond to one spatial parameter (or a group of spatial parameters), and each unified TCI state may be represented by using an index. In this example, the first DCI may carry one unified TCI index, and the unified TCI index respectively corresponds to different unified TCIs in previously configured different unified TCI state pools. That is, the unified TCI index may indicate a plurality of spatial parameters including the third spatial parameter and the fourth spatial parameter. Therefore, in this application, S101 may alternatively be replaced with that the network device sends spatial parameter indication information to the terminal device, where the spatial parameter indication information indicates the third spatial parameter and the fourth spatial parameter, or the spatial parameter indication information may include the third spatial parameter and the fourth spatial parameter. Optionally, the spatial parameter indication information may be carried in the DCI.

S202: The terminal device and/or the network device communicate/communicates a third signal/channel based on the third spatial parameter, where a port of the third signal/channel corresponds to the third indication information, and a type of the third signal/channel is the third type.

It should be understood that, in the procedure shown in FIG. 7, for the third indication information, the third spatial parameter, the third type, and the third type of signal/channel herein, respectively refer to the descriptions of the first indication information, the first spatial parameter, the first type, and the first type of signal/channel in this application. For example, a manner in which the third indication information indicates the third spatial parameter is similar to or the same as the manner in which the first indication information indicates the first spatial parameter, a manner of determining an application range of the third indication information is the same as the manner of determining the application range of the first indication information, and a first index of the third indication information is similar to or the same as the first index of the first indication information. Details are not described again.

Similarly, for the fourth indication information, the fourth spatial parameter, the fourth type, and the fourth type of signal/channel herein, respectively refer to the descriptions of the first indication information, the first spatial parameter, the first type, and the first type of signal/channel in this application. For example, a manner in which the fourth indication information indicates the fourth spatial parameter is similar to or the same as the manner in which the first indication information indicates the first spatial parameter, a manner of determining an application range of the fourth indication information is the same as the manner of determining the application range of the first indication information, and a first index of the fourth indication information is similar to or the same as the first index of the first indication information. Details are not described again.

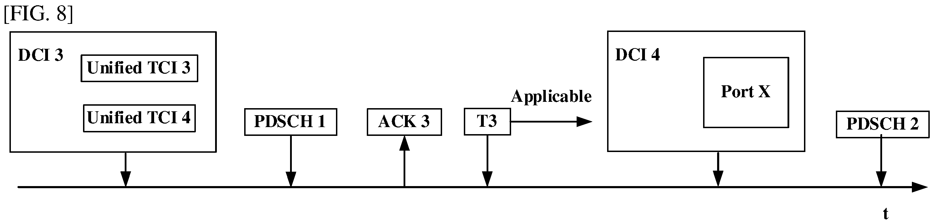

It should further be understood that, in S201, if both the third indication information and the fourth indication information are unified TCIs, application time of the third indication information and the fourth indication information may be determined based on a HARQ-ACK indicated by the third DCI. For example, the application time is after the HARQ-ACK indicated by the third DCI. In other words, in this case, application time of the third indication information is the same as application time of the fourth indication information. For a manner of determining the application time, refer to the descriptions of the manner of determining the application time of the first indication information in this application. For example, as shown in FIG. 8, the third indication information includes a unified TCI 3 (the unified TCI 3 is for representation in FIG. 8), and the fourth indication information includes a unified TCI 4 (the unified TCI 4 is for representation in FIG. 8) in FIG. 8, where T3 is application time of the unified TCI 3 and the unified TCI 4. The application time is later than an ACK 3 shown in FIG. 8. The ACK 3 indicates a time domain resource of a HARQ-ACK indicated by DCI 3 (namely, the third DCI).

In this application, in a manner such as predefinition in a protocol, presetting, or preconfiguration, the terminal device and the network device may determine a correspondence between the spatial parameter indication information (including the third indication information) and the CDM groups (including a CDM group to which a port of the third signal/channel belongs), or the network device may indicate a correspondence between the spatial parameter indication information and the CDM groups to the terminal device by using the RRC message, the MAC CE, or the like. Therefore, when the third signal/channel is communicated between the network device and the terminal device by using the third spatial parameter, the network device may determine, based on the correspondence between the spatial parameter indication information and the CDM groups, a CDM group corresponding to the third spatial parameter, and allocate a port from the CDM group to the terminal device. Optionally, the network device may indicate the port to the terminal device by using port indication information. Accordingly, after receiving the port indication information, the terminal device determines, based on the correspondence between the spatial parameter indication information and the CDM group, that the indication information of the spatial parameter corresponding to the CDM group to which the port belongs is the third indication information, thereby communicating the third signal/channel on the port by using the third spatial parameter indicated by the third indication information.

For example, the port indication information may be included in fourth DCI.

As shown in FIG. 8, the DCI 3 (namely, the third DCI) may indicate the unified TCI 3 and the unified TCI 3. T3 is application time of a unified TCI 1 and a unified TCI 2. When the network device schedules, by using DCI 4 (namely, the fourth DCI), the terminal device to receive a PDSCH 2, the terminal device may determine, based on port indication information carried in the DCI 4, to receive the PDSCH 2 based on the unified TCI 3 or the unified TCI 4.

Specifically, when a port X indicated by the DCI 4 belongs to a CDM group corresponding to the unified TCI 3, the terminal device may determine to receive the PDSCH 2 based on QCL indicated by the unified TCI 3. In this case, the unified TCI 3 is the third indication information; and/or when a port X indicated by DCI 2 belongs to a CDM group corresponding to the unified TCI 4, the terminal device may determine to receive the PDSCH 2 based on QCL indicated by the unified TCI 4. In this case, the unified TCI 4 is the third indication information.

Optionally, the port indication information further indicates, to the terminal device, a transmission mode used when a signal/channel is communicated through the port X. There is a correspondence between the transmission mode and the port X or a time-frequency resource group to which the port X belongs. Accordingly, the terminal device may further determine the signal/channel transmission mode based on the correspondence between the transmission mode and the port X or the time-frequency resource group to which the port X belongs. The signal/channel transmission mode includes any one of an SDM transmission mode, an FDM transmission mode, a TDM transmission mode, or a single TCI (single TCI, S-TCI) transmission mode. The S-TCI transmission mode means that the signal/channel is communicated between the network device and the terminal device by using only one of a plurality of TRPs. It may be understood that the terminal device receives one TCI codepoint in the S-TCI transmission mode.

It should be understood that the correspondence between the transmission mode and the port X or the time-frequency resource group to which the port X belongs may be determined in the manner such as predefinition in the protocol, presetting, or preconfiguration, or may be indicated by the network device to the terminal device by using the RRC message, the MAC CE, or the like.

For example, the correspondence between the transmission mode and the time-frequency resource group to which the port X belongs is shown in Table 3. It should be understood that there may be one or more ports X herein.

The at least one port X indicated by the network device by using the DCI 4 shown in FIG. 8 is used as an example. In Table 3, a CDM group 1, a CDM group 2, and a CDM group 3 respectively indicate that the port X includes a port in the CDM group 1, that the port X includes a port in the CDM group 2, and that the port X includes a port in the CDM group 3. In Table 3, a CDM group A+a CDM group B indicate that the port X indicates ports in both the CDM group A and the CDM group 2. Optionally, a spatial parameter used by each of the ports X to communicate a signal/channel may be determined by using the procedure shown in FIG. 7 in this application. For example, based on the communication method shown in FIG. 7, when the port X includes a plurality of ports that belong to different CDM groups, the plurality of ports may use different spatial parameters.

If a DMRS type configured by the network device is a DMRS type 1 (DMRS type 1), the CDM group includes the CDM group 1 and the CDM group 2. If a DMRS type configured by the network device is a DMRS type 2 (DMRS type 2), the CDM groups may include the CDM group 1, the CDM group 2, and the CDM group 3.

**Table 3**

| | DMRS type 1 | DMRS type 2 option 1 | DMRS type 2 option 2 |
|---|---|---|---|
| SDM | Case 1: a CDM group 1+a CDM group 2 | Case 2: the CDM group 1+the CDM group 2/the CDM group 1+the CDM group 2+a CDM group 3 | Case 3: the CDM group 1+the CDM group 2/CDM group 3 |
| FDM/TDM | Case 4: the CDM group 1 | Case 5: the CDM group 1 | Case 6: the CDM group 1 |
| S-TCI1 | Case 7: the CDM group 2 | Case 8: the CDM group 2 | Case 9: the CDM group 1+the CDM group 2+the CDM group 3 |
| S-TCI2 | | Case 10: the CDM group 3 | Case 11: the CDM group 3 |

It should be understood that the DMRS type 2 option 1 and the DMRS type 2 option 2 in Table 3 respectively represent different examples that are of the correspondence between the transmission mode and the time-frequency resource group to which the port X belongs and that corresponds when the DMRS type configured by the network device is the DMRS type 2.

As shown in Table 3, in Case 1, if the DCI 2 indicates at least two ports, where the at least two ports respectively belong to a CDM group corresponding to the unified TCI 1 and a CDM group corresponding to the unified TCI 2, or in other words, at least one port belongs to the CDM group corresponding to the unified TCI 1 and at least one port belongs to the CDM group corresponding to the unified TCI 2, the terminal device may perform signal/channel transmission through the plurality of ports in a spatial division multiplexing manner.

For another example, in Case 2 shown in Table 3, when the ports X include the port in the CDM group 1 and the port in the CDM group 2, or includes the port in the CDM group 1, the port in the CDM group 2, and the port in the CDM group 3, the terminal device perform signal/channel transmission through the ports X in a spatial multiplexing manner.

Case 3 is similar to Case 2. When the ports X include the port in the CDM group 1 and the port in the CDM group 2, or includes the port in the CDM group 1 and the port in the CDM group 3, the terminal device perform signal/channel transmission through the ports X in a spatial multiplexing manner.

In other words, in Case 1, Case 2, and Case 3, if the port X includes a plurality of ports that belong to a plurality of CDM groups, a corresponding transmission mode is SDM.

In Case 4, Case 5, and Case 6 shown in Table 3, when the port X includes at least one port in a same CDM group (for example, the CDM group 1 or the CDM group 2), the terminal device may perform signal/channel transmission through the port X in an FDM or TDM manner. In other words, a transmission mode corresponding to the CDM is FDM or TDM.

For another example, in Case 7, Case 8, Case 10, and Case 11 shown in Table 3, when the port X includes at least one port in a CDM group (for example, the CDM group 2 in Case 7 and Case 8 or the CDM group 3 in Case 10 and Case 11), the terminal device may alternatively perform transmission in an S-TCI manner. In this case, a transmission mode corresponding to the CDM group is the S-TCI transmission mode, where the S-TCI 1 indicates that signal/channel transmission is performed by using only a TRP corresponding to the S-TCI 1, and the S-TCI 2 indicates that signal/channel transmission is performed by using only a TRP corresponding to the S-TCI 2. A correspondence between the S-TCI 1/S-TCI 2 and the TRP may be predefined in the protocol, preset, or preconfigured in the terminal device or the network device, or may be indicated by the network device to the terminal device by using the RRC message or the MAC CE.

In Case 9 shown in Table 3, if the ports X include ports in the CDM group 1, the CDM group 2, and the CDM group 3, the terminal device may perform signal/channel transmission through the ports X in the S-TCI transmission mode.

Optionally, the terminal device may further send transmission capability information. Accordingly, the network device receives the transmission capability information. The transmission capability information may indicate that the terminal device supports uplink signal transmission performed by using N beams, and N is a positive integer.

If the terminal device supports uplink signal transmission performed by using a plurality of beams, that is, N is greater than or equal to 2, the terminal device may communicate a plurality of PUCCHs by using a plurality of unified TCIs. If the terminal device does not support uplink signal transmission performed by using a plurality of beams, that is, N is less than 2, the terminal device communicates a plurality of PUCCHs by using only one unified TCI. Any PUCCH may be considered as the third signal/channel in the third aspect. Therefore, a spatial parameter for communicating the PUCCH may be determined in the manner shown in the third aspect.

For example, if the network device receives the transmission capability information of the terminal device, and the transmission capability information indicates that the terminal device supports uplink signal transmission performed by using two beams, the network device may indicate the terminal device to communicate PUCCHs by using two spatial parameters. For example, the network device schedules the terminal device to respectively communicate two PUCCHs through a port #0 and a port #2. For example, Case 1 shown in Table 3 is used, and the terminal device respectively communicates the two PUCCHs in the SDM manner. The terminal device may communicate a PUCCH on the port #0 by using a spatial parameter corresponding to the port #0 (or a CDM group to which the port #0 belongs), and the terminal device may communicate a PUCCH on the port #2 by using a spatial parameter corresponding to the port #2 (or a CDM group to which the port #2 belongs), to implement spatial division multiplexing transmission of the PUCCHs.

It may be understood that, with reference to S103 to S106, when at least two types of signals/channels included in a second type or a first signal/channel includes an uplink signal/channel, S202 may include 203 and S204 below.

S203. The terminal device sends the third signal/channel based on the third spatial parameter.

For the third spatial parameter, refer to the descriptions of the first spatial parameter in this application. For example, when the at least two types of signals/channels included in the third type or the first signal/channel includes the uplink signal/channel, the third spatial parameter may include QCL information, where the QCL information may indicate a spatial related parameter (which is also referred to as a spatial related feature) of a downlink signal. Alternatively, when the at least two types of signals include a downlink signal, the third spatial parameter may include TCI information. Alternatively, when the at least two types of signals include a downlink signal, the third spatial parameter may include TCI state information.

In a possible example, when two types of signals/channels included in the third type or the first signal/channel includes the uplink signal/channel, the third spatial parameter information is type D QCL information. The uplink signal/channel may include at least one of the PUCCH, the PUSCH, the SRS, the PTRS, the DMRS, or the like. For example, when the uplink signal is the SRS, the spatial parameter information is the type D QCL information. For the type D QCL information, refer to the descriptions in this application. Details are not described herein again.

Optionally, the terminal device may perform S203 after the application time of the third indication information or the third spatial parameter.

It may be understood that, that the terminal device sends the third signal/channel based on the third spatial parameter may mean that the terminal device sends the third signal/channel by using the third spatial parameter.

S204: The network device receives the third signal/channel based on the third spatial parameter.

Optionally, the network device may perform S204 after the application time of the third indication information or the third spatial parameter.

It may be understood that, that the network device receives the third signal/channel based on the third spatial parameter may mean that the network device receives the third signal/channel by using the third spatial parameter.

In addition, it may be understood that, when the third signal/channel includes a downlink signal/channel, S202 may include S205 and S206 below.

S205: The network device sends the third signal/channel based on the third spatial parameter.

For the third spatial parameter, refer to the descriptions of the first spatial parameter in this application. For example, when the at least two types of signals/channels included in the third type or the first signal/channel includes an uplink signal/channel, the third spatial parameter may include QCL information, where the QCL information may indicate a spatial related parameter (which is also referred to as a spatial related feature) of the downlink signal. Alternatively, when the at least two types of signals include the downlink signal, the third spatial parameter may include TCI information. Alternatively, when the at least two types of signals include the downlink signal, the third spatial parameter may include TCI state information.

It should be understood that the downlink signal/channel may include at least one of the PDCCH, the PDSCH, the TRS, the CSI-RS, the PTRS, the DMRS, the SSB, or the like.

Optionally, the network device may perform S205 after the application time of the third indication information or the third spatial parameter.

It may be understood that, that the network device sends the third signal/channel based on the third spatial parameter may mean that the terminal device sends the third signal/channel by using the third spatial parameter.

S206: The terminal device receives the third signal/channel based on the third spatial parameter.

Optionally, the network device may perform S206 after the application time of the third indication information or the third spatial parameter.

It may be understood that, that the network device receives the third signal/channel based on the third spatial parameter may mean that the network device receives the third signal/channel by using the third spatial parameter.

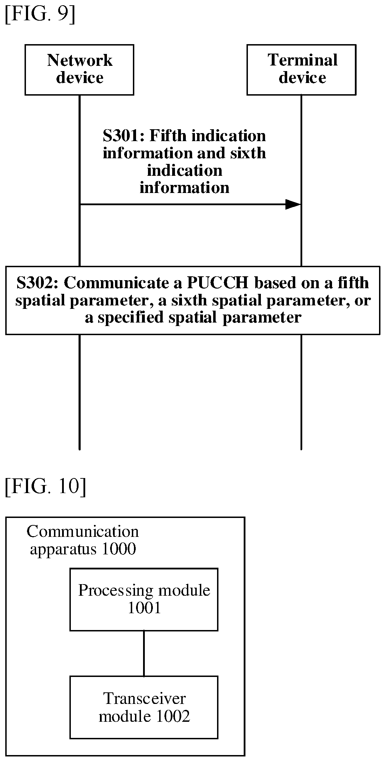

As shown in FIG. 9, in another communication method in an embodiment of this application, if a network device indicates a plurality of spatial parameters to a terminal device by using different DCI, and HARQ-ACKs respectively indicated by a plurality of pieces of DCI are jointly encoded, a PUCCH for carrying the jointly encoded HARQ-ACKs may be communicated between the network device and the terminal device by using any one of the plurality of spatial parameters or a default or specified spatial parameter.

As shown in FIG. 9, the communication method may include the following steps.

S301: The network device sends fifth indication information and sixth indication information to the terminal device.

Accordingly, the terminal device receives the fifth indication information and the sixth indication information.

The fifth indication information is included in fifth DCI, and indicates a fifth spatial parameter. The sixth indication information is included in sixth DCI, and indicates a sixth spatial parameter. Optionally, the network device may further indicate, to the terminal device by using an RRC message, a MAC CE, or DCI, that a HARQ-ACK indicated by the fifth DCI and a HARQ-ACK indicated by the sixth DCI are jointly encoded.

It should be understood that, for the fifth indication information and the fifth spatial parameter, respectively refer to the descriptions of the first indication information and the first spatial parameter in this application; and for the sixth indication information and the sixth spatial parameter, respectively refer to the descriptions of the first indication information and the first spatial parameter in this application. Details are not described herein again. For example, a fifth type of signal/channel and/or a sixth type of signal/channel include/includes at least two types of signals/channels in an SRS, a CSI-RS, a PDSCH, a PDCCH, a PUSCH, a PUCCH, a PTRS, a DMRS, a TRS, or an SSB. The fifth indication information and the sixth indication information are included in a same piece of DCI. The fifth spatial parameter and/or the sixth spatial parameter may include QCL information and/or spatial relation information for signal/channel transmission.

In addition, in S301, it is not excluded that a third spatial parameter and the sixth spatial parameter are configured for the terminal device by using one field (for example, a TCI field) in first DCI. In this case, S301 may be replaced with that the network device sends indication information of the fifth spatial parameter and/or the sixth spatial parameter to the terminal device. Descriptions of the fifth spatial parameter and the sixth spatial parameter are the same as the descriptions in S201. For example, the network device may configure different unified TCI state pools for different TRPs. That is, unified TCI state pools corresponding to the different TRPs may be different. Therefore, in an M-TRP scenario, a value of one DCI field may correspond to different TCI states in different unified TCI state pools. Therefore, in an example of a procedure shown in FIG. 9, the network device may respectively indicate, by using the value of the TCI field in the DCI, the fifth spatial parameter and the sixth spatial parameter from the unified TCI state pools corresponding to the different TRPs.

S302: The PUCCH is communicated between the terminal device and the network device by using the fifth spatial parameter, the sixth spatial parameter, or the specified spatial parameter, where the PUCCH may be for carrying the HARQ-ACK indicated by fifth DCI and the HARQ-ACK indicated by sixth DCI.

Optionally, in S302, the terminal device and the network device may communicate, after application time of the fifth spatial parameter, the sixth spatial parameter, or the specified spatial parameter, the PUCCH based on the fifth spatial parameter, the sixth spatial parameter, or the specified spatial parameter that is applicable.

For a manner of determining the application time of the fifth spatial parameter and/or the application time of the sixth spatial parameter, refer to the descriptions of the manner of the application time of the first spatial parameter in this application. The application time of the specified spatial parameter may be predefined in a protocol, preset, or preconfigured, or may be determined through negotiation between the network device and the terminal device. This is not specifically required in this application.

It may be understood that, with reference to S103 to S106, that the PUCCH is communicated between the terminal device and the network device by using the fifth spatial parameter in S302 is used as an example. S302 may include S303 and S304 below.

S303: The terminal device sends the PUCCH based on the fifth spatial parameter.

For the fifth spatial parameter, refer to the descriptions of the first spatial parameter in this application. For example, when the at least two types of signals/channels included in the fifth type or a first signal/channel includes an uplink signal/channel, the fifth spatial parameter may include QCL information, where the QCL information may indicate a spatial related parameter (which is also referred to as a spatial related feature) of a downlink signal. Alternatively, when the at least two types of signals include a downlink signal, the fifth spatial parameter may include TCI information. Alternatively, when the at least two types of signals include a downlink signal, the fifth spatial parameter may include TCI state information.

In a possible example, when two types of signals/channels included in the fifth type or the first signal/channel includes the uplink signal/channel, the fifth spatial parameter information is type D QCL information.

Optionally, the terminal device may perform S303 after the application time of the fifth indication information or the fifth spatial parameter.

It may be understood that, that the terminal device sends the PUCCH based on the fifth spatial parameter may mean that the terminal device sends the PUCCH by using the fifth spatial parameter.

S304: The network device receives the PUCCH based on the fifth spatial parameter.

Optionally, the network device may perform S304 after the application time of the fifth indication information or the fifth spatial parameter.

It may be understood that, that the network device receives the PUCCH based on the fifth spatial parameter may mean that the network device receives the PUCCH by using the fifth spatial parameter.

Based on the procedure shown in FIG. 9, when the network device indicates a plurality of pieces of spatial parameter indication information to the terminal device by using the DCI corresponding to the jointly encoded HARQ-ACKs, the PUCCH for carrying the jointly encoded HARQ-ACKs may be communicated between the terminal device and the network device by using any one of the plurality of spatial parameters or the default or specified spatial parameter, to improve transmission reliability. In this case, for the plurality of spatial parameters, application ranges of the spatial parameters may include the PUCCH.

Optionally, in the procedure shown in FIG. 9, the terminal device may further report capability information to the network device, where the capability information indicates that the terminal device supports uplink signal/channel transmission performed by using M beams, and M is a positive integer.

Optionally, in embodiments of this application, the network device may further send indication information to the terminal device, so that the terminal device performs any communication method in FIG. 5, FIG. 7, or FIG. 9 provided in this application. The indication information may be for activating the terminal device to perform the communication method provided in embodiments of this application. Therefore, after receiving the indication information, the terminal device may perform any one or more communication methods in FIG. 5, FIG. 7, or FIG. 9. When the terminal device does not receive the indication information, the terminal device does not perform the communication methods shown in FIG. 5, FIG. 7, and FIG. 9. For example, if the first indication information includes the unified TCI, the indication information may be a unified TCI switch carried in the RRC message or the MAC CE.

For example, the first indication information is the unified TCI. If a signal/channel to which the unified TCI is applicable is configured by using the RRC message or the MAC CE, the terminal device communicates the signal/channel in a current BWP. Alternatively, if the signal/channel includes an SRS or a CSI-RS, the signal/channel from which an SRS for beam management (beam management, BM) or a CSI-RS for the beam management is excluded is used as the first type of signal/channel. Alternatively, the first type of signal/channel is determined, in another manner shown in this application, in the signal/channel from which the SRS for the beam management or the CSI-RS for the beam management is excluded.

In addition, in embodiments of this application, the network device may further send indication information to the terminal device by using the RRC message, the MAC CE, or the DCI, so that the terminal device learns that a spatial parameter indicated by at least one of the first indication information, the second indication information, the third indication information, the third indication information, the fifth indication information, or the sixth indication information in this application is for communicating at least two types of signals/channels. In other words, the indication information indicates that at least one of the first indication information, the second indication information, the third indication information, the third indication information, the fifth indication information, or the sixth indication information is a unified TCI.

The network architecture and the service scenario in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

In embodiments of this application, interaction between the terminal device and the network device is used as an example for description. The methods provided in embodiments of this application may further be applicable to interaction between other execution bodies, for example, interaction between a chip or a module in the terminal device and a chip or a module in the network device. When the execution body is a chip or a module, refer to the descriptions in embodiments of this application. Details are not described herein again.

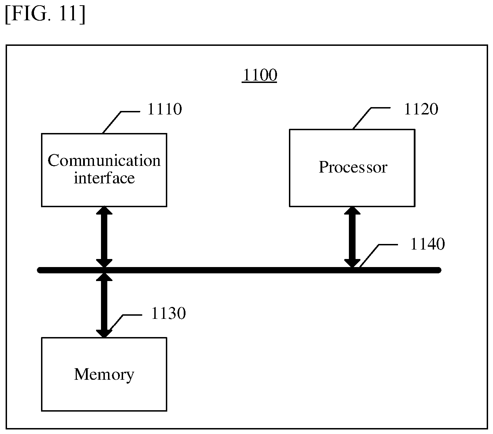

Based on the foregoing content and a same concept, FIG. 10 and FIG. 11 are diagrams of structures of possible communication apparatuses according to this application. The communication apparatus may be configured to implement the functions of the terminal device or the network device in the foregoing method embodiments. Therefore, the beneficial effect of the foregoing method embodiments can also be implemented.

In this application, the communication apparatus may be any one of the terminal device and the network device shown in FIG. 1. This is not specifically required.

As shown in FIG. 10, the communication apparatus 1000 includes a processing module 1001 and a transceiver module 1002.

The processing module 1001 in the communication apparatus 1000 may be configured to implement the functions of any one of the terminal device and the network device in the method embodiment shown in FIG. 5, FIG. 7, or FIG. 9, for example, perform the action represented by a rectangular box in the flowchart shown in FIG. 5, FIG. 7, or FIG. 9. The transceiver module 1002 may be configured to support communication between the communication apparatus 1000 and another communication device. For example, when the communication apparatus 1000 is the terminal device, the transceiver module 1002 may be used by the terminal device to communicate with a network device, for example, perform the action represented by an arrow connection line in the flowchart shown in FIG. 5, FIG. 7, or FIG. 9.

FIG. 11 shows the apparatus 1100 according to an embodiment of this application. The apparatus shown in FIG. 11 may be an implementation of a hardware circuit of the apparatus shown in FIG. 10. The apparatus is applicable to the flowcharts shown above, and performs the functions of any one of the terminal device and the network device in the foregoing method embodiments.

For ease of description, FIG. 11 shows only main components of the apparatus.

The apparatus 1100 shown in FIG. 11 includes a communication interface 1110, a processor 1120, and a memory 1130. The memory 1130 is configured to store program instructions and/or data. The processor 1120 may operate in cooperation with the memory 1130. The processor 1120 may execute the program instructions stored in the memory 1130. When the instructions or programs stored in the memory 1130 are executed, the processor 1120 is configured to perform the operations performed by the processing module 1001 in the foregoing embodiment, and the communication interface 1110 is configured to perform the operations performed by the transceiver module 1002 in the foregoing embodiment.

The memory 1130 is coupled to the processor 1120. Coupling in this embodiment of this application may be indirect coupling or a communication connection between apparatuses, units, or modules in an electrical form, a mechanical form, or another form, and is for information exchange between the apparatuses, the units, or the modules. At least one of memories 1130 may be included in the processor 1120.

In this embodiment of this application, the communication interface may be a transceiver, a circuit, a bus, a module, or another type of communication interface. In this embodiment of this application, when the communication interface is the transceiver, the transceiver may include an independent receiver and an independent transmitter, or may be a transceiver or a communication interface integrated with a transceiver function.

The apparatus 1100 may further include a communication line 1140. The communication interface 1110, the processor 1120, and the memory 1130 may be connected to each other through the communication line 1140. The communication line 1140 may be a peripheral component interconnect (peripheral component interconnect, PCI) bus, an extended industry standard architecture (extended industry standard architecture, EISA) bus, or the like. The communication line 1140 may be classified into an address bus, a data bus, a control bus, and the like. For ease of representation, only one bold line is for representing the bus in FIG. 11, but this does not mean that there is only one bus or only one type of bus.

An embodiment of this application further provides a computer-readable storage medium, including instructions. When the instructions are run on a computer, the computer is enabled to perform the method performed by any one of the terminal device and the network device in the embodiment shown in FIG. 5, FIG. 7, or FIG. 9.

An embodiment of this application further provides a computer program product, including computer instructions. When the computer instructions are run on a computer, the computer is enabled to perform the method performed by any one of the terminal device and the network device in the embodiment shown in FIG. 5, FIG. 7, or FIG. 9.

An embodiment of this application further provides a chip system, including a processor. The processor is coupled to a memory. The memory is configured to store a program or instructions. When the program or the instructions are executed by the processor, the chip system is enabled to perform the method performed by any one of the terminal device and the network device in the embodiment shown in FIG. 5, FIG. 7, or FIG. 9.

An embodiment of this application further provides a communication system, including any one or more of the terminal device and the network device in the embodiment shown in FIG. 5, FIG. 7, or FIG. 9.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits described in embodiments of this application may implement or operate the functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

In one or more example designs, the foregoing functions in this application may be implemented by using hardware, software, firmware, or any combination thereof. If the functions are implemented by using the software, the functions may be stored in a computer-readable medium, or are transmitted to the computer-readable medium in a form of one or more instructions or code. The computer-readable medium includes a computer storage medium and a communication medium that enables a computer program to move from one place to another. The storage media may be an available medium that may be accessed by any general or special computer. For example, such a computer-readable medium may include but is not limited to a RAM, a ROM, an EEPROM, a CD-ROM, or another optical disc storage, a magnetic disk storage or another magnetic storage apparatus, or any other medium that may be for carrying or storing program code that is in a form of instructions or a data structure and in another form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in wireless manners, such as infrared, radio, and microwave, the software is included in the defined computer-readable medium. The disk (disk) and the disc (disc) include a compact disc, a laser disc, an optical disc, a digital versatile disc (digital versatile disc, DVD), a floppy disk, and a Blu-ray disc. The disc usually copies data in a magnetic manner, and the disk usually copies data optically in a laser manner. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

Although this application is described with reference to specific features and embodiments thereof, it is clear that various modifications and combinations may be made to this application without departing from the spirit and scope of this application. Accordingly, the specification and accompanying drawings are merely example descriptions of this application defined by the accompanying claims, and are considered as covering any of or all modifications, variations, combinations, or equivalents within the scope of this application. It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, comprising:
receiving first indication information, wherein the first indication information indicates a first spatial parameter, the first spatial parameter is for communicating a first type of signal/channel, and the first type of signal/channel comprises at least two of a sounding reference signal SRS, a channel state information reference signal CSI-RS, a physical uplink control channel PUCCH, a physical downlink shared channel PDSCH, a physical downlink control channel PDCCH, a physical uplink shared channel PUSCH, a phase tracking reference signal PTRS, a demodulation reference signal DMRS, a tracking reference signal TRS, or a synchronization signal block SSB; and
communicating a first signal/channel based on the first spatial parameter, wherein a type of the first signal/channel is the first type, and a first index corresponding to the first signal/channel is the same as a first index corresponding to the first indication information.

2. The method according to claim 1, wherein application time of the first indication information is after a hybrid automatic repeat request-acknowledgement HARQ-ACK indicated by first downlink control information DCI, and sending time of the first signal/channel is after the application time of the first indication information.

3. The method according to claim 1 or 2, further comprising:
receiving second indication information, wherein the second indication information indicates a second spatial parameter; and
communicating a second signal/channel based on the second spatial parameter, wherein the second signal/channel belongs to a second type, the second type of signal/channel comprises at least two of the SRS, the CSI-RS, the PDSCH, the PDCCH, the PUSCH, the PUCCH, the PTRS, the DMRS, the TRS, or the SSB, and a second index corresponding to the second signal/channel is the same as a second index corresponding to the second indication information.

4. The method according to any one of claims 1 to 3, wherein the type of the first signal/channel comprises a periodic SRS or a periodic CSI-RS, the first index corresponding to the first signal/channel is a control resource set group index, and the control resource set group index is determined based on indication information in reference signal resource information corresponding to the first signal/channel.

5. The method according to any one of claims 1 to 3, wherein
the first index corresponding to the first indication information comprises an index of a control resource set group corresponding to the first DCI, and the first DCI comprises the first indication information; and
the first index corresponding to the first signal/channel comprises an index of a control resource set group corresponding to second DCI, and the second DCI is for scheduling the first signal/channel.

6. The method according to any one of claims 1 to 5, wherein the method further comprises:
receiving first information, wherein the first information indicates that the first indication information is applicable to the first signal/channel.

7. The method according to any one of claims 1 to 6, wherein the first indication information is carried in a target field in the first DCI, and the target field is a transmission configuration indication TCI field.

8. The method according to claim 1 or 3, wherein
the first indication information is carried in radio resource control RRC signaling or media access control control element MAC CE signaling; and/or
any type of signal/channel in the at least two types of signals/channels is indicated by RRC signaling or MAC CE signaling.

9. A communication method, comprising:
sending first indication information, wherein the first indication information indicates a first spatial parameter, the first spatial parameter is for communicating a first type of signal/channel, and the first type of signal/channel comprises at least two of a sounding reference signal SRS, a channel state information reference signal CSI-RS, a physical uplink control channel PUCCH, a physical downlink shared channel PDSCH, a physical downlink control channel PDCCH, a physical uplink shared channel PUSCH, a phase tracking reference signal PTRS, a demodulation reference signal DMRS, a tracking reference signal TRS, or a synchronization signal block SSB; and
communicating a first signal/channel based on the first spatial parameter, wherein a type of the first signal/channel is the first type, and a first index corresponding to the first signal/channel is the same as a first index corresponding to the first indication information.

10. The method according to claim 9, wherein application time of the first indication information is after a hybrid automatic repeat request-acknowledgement HARQ-ACK indicated by first downlink control information DCI, and sending time of the first signal/channel is after the application time of the first indication information.

11. The method according to claim 9 or 10, further comprising:
sending second indication information, wherein the second indication information indicates a second spatial parameter; and
communicating a second signal/channel based on the second spatial parameter, wherein the second signal/channel belongs to a second type, the second type of signal/channel comprises at least two of the SRS, the CSI-RS, the PDSCH, the PDCCH, the PUSCH, the PUCCH, the PTRS, the DMRS, the TRS, or the SSB, and a second index corresponding to the second signal/channel is the same as a second index corresponding to the second indication information.

12. The method according to any one of claims 9 to 11, wherein the type of the first signal/channel comprises a periodic SRS or a periodic CSI-RS, the first index corresponding to the first signal/channel is a control resource set group index, and the control resource set group index is determined based on indication information in reference signal resource information corresponding to the first signal/channel.

13. The method according to any one of claims 9 to 11, wherein
the first index corresponding to the first indication information comprises an index of a control resource set group corresponding to the first DCI, and the first DCI comprises the first indication information; and
the first index corresponding to the first signal/channel comprises an index of a control resource set group corresponding to second DCI, and the second DCI is for scheduling the first signal/channel.

14. The method according to any one of claims 9 to 13, wherein the method further comprises:
receiving first information, wherein the first information indicates that the first indication information is applicable to the first signal/channel.

15. The method according to any one of claims 9 to 14, wherein the first indication information is carried in a target field in the first DCI, and the target field is a transmission configuration indication TCI field.

16. The method according to claim 9 or 11, wherein
the first indication information is carried in radio resource control RRC signaling or media access control control element MAC CE signaling; and/or
any type of signal/channel in the at least two types of signals/channels is indicated by RRC signaling or MAC CE signaling.

17. A communication apparatus, comprising a transceiver module and a processing module, wherein
the transceiver module is configured to receive first indication information, wherein the first indication information indicates a first spatial parameter, the first spatial parameter is for communicating a first type of signal/channel, and the first type of signal/channel comprises at least two of a sounding reference signal SRS, a channel state information reference signal CSI-RS, a physical uplink control channel PUCCH, a physical downlink shared channel PDSCH, a physical downlink control channel PDCCH, a physical uplink shared channel PUSCH, a phase tracking reference signal PTRS, a demodulation reference signal DMRS, a tracking reference signal TRS, or a synchronization signal block SSB; and
the processing module is configured to communicate a first signal/channel based on the first spatial parameter, wherein a type of the first signal/channel is the first type, and a first index corresponding to the first signal/channel is the same as a first index corresponding to the first indication information.

18. The apparatus according to claim 17, wherein application time of the first indication information is after a hybrid automatic repeat request-acknowledgement HARQ-ACK indicated by first downlink control information DCI, and sending time of the first signal/channel is after the application time of the first indication information.

19. The apparatus according to claim 17 or 18, wherein the transceiver module is further configured to:
receive second indication information, wherein the second indication information indicates a second spatial parameter; and
communicate a second signal/channel based on the second spatial parameter, wherein the second signal/channel belongs to a second type, the second type of signal/channel comprises at least two of the SRS, the CSI-RS, the PDSCH, the PDCCH, the PUSCH, the PUCCH, the PTRS, the DMRS, the TRS, or the SSB, and a second index corresponding to the second signal/channel is the same as a second index corresponding to the second indication information.

20. The apparatus according to any one of claims 17 to 19, wherein the type of the first signal/channel comprises a periodic SRS or a periodic CSI-RS, the first index corresponding to the first signal/channel is a control resource set group index, and the control resource set group index is determined based on indication information in reference signal resource information corresponding to the first signal/channel.

21. The apparatus according to any one of claims 17 to 20, wherein
the first index corresponding to the first indication information comprises an index of a control resource set group corresponding to the first DCI, and the first DCI comprises the first indication information; and
the first index corresponding to the first signal/channel comprises an index of a control resource set group corresponding to second DCI, and the second DCI is for scheduling the first signal/channel.

22. The apparatus according to any one of claims 17 to 21, wherein the transceiver module is further configured to:
receive first information, wherein the first information indicates that the first indication information is applicable to the first signal/channel.

23. The apparatus according to any one of claims 17 to 22, wherein the first indication information is carried in a target field in the first DCI, and the target field is a transmission configuration indication TCI field.

24. The apparatus according to claim 17 or 19, wherein
the first indication information is carried in radio resource control RRC signaling or media access control control element MAC CE signaling; and/or
any type of signal/channel in the at least two types of signals/channels is indicated by RRC signaling or MAC CE signaling.

25. A communication apparatus, comprising a transceiver module and a processing module, wherein
the transceiver module is configured to send first indication information, wherein the first indication information indicates a first spatial parameter, the first spatial parameter is for communicating a first type of signal/channel, and the first type of signal/channel comprises at least two of a sounding reference signal SRS, a channel state information reference signal CSI-RS, a physical uplink control channel PUCCH, a physical downlink shared channel PDSCH, a physical downlink control channel PDCCH, a physical uplink shared channel PUSCH, a phase tracking reference signal PTRS, a demodulation reference signal DMRS, a tracking reference signal TRS, or a synchronization signal block SSB; and
the processing module is configured to communicate a first signal/channel based on the first spatial parameter, wherein a type of the first signal/channel is the first type, and a first index corresponding to the first signal/channel is the same as a first index corresponding to the first indication information.

26. The apparatus according to claim 25, wherein application time of the first indication information is after a hybrid automatic repeat request-acknowledgement HARQ-ACK indicated by first downlink control information DCI, and sending time of the first signal/channel is after the application time of the first indication information.

27. The apparatus according to claim 25 or 26, wherein the transceiver module is further configured to:
send second indication information, wherein the second indication information indicates a second spatial parameter; and
communicate a second signal/channel based on the second spatial parameter, wherein the second signal/channel belongs to a second type, the second type of signal/channel comprises at least two of the SRS, the CSI-RS, the PDSCH, the PDCCH, the PUSCH, the PUCCH, the PTRS, the DMRS, the TRS, or the SSB, and a second index corresponding to the second signal/channel is the same as a second index corresponding to the second indication information.

28. The apparatus according to any one of claims 25 to 27, wherein the type of the first signal/channel comprises a periodic SRS or a periodic CSI-RS, the first index corresponding to the first signal/channel is a control resource set group index, and the control resource set group index is determined based on indication information in reference signal resource information corresponding to the first signal/channel.

29. The apparatus according to any one of claims 25 to 28, wherein
the first index corresponding to the first indication information comprises an index of a control resource set group corresponding to the first DCI, and the first DCI comprises the first indication information; and
the first index corresponding to the first signal/channel comprises an index of a control resource set group corresponding to second DCI, and the second DCI is for scheduling the first signal/channel.

30. The apparatus according to any one of claims 25 to 29, wherein the transceiver module is further configured to:
receive first information, wherein the first information indicates that the first indication information is applicable to the first signal/channel.

31. The apparatus according to any one of claims 25 to 30, wherein the first indication information is carried in a target field in the first DCI, and the target field is a transmission configuration indication TCI field.

32. The apparatus according to claim 25 or 27, wherein
the first indication information is carried in radio resource control RRC signaling or media access control control element MAC CE signaling; and/or
any type of signal/channel in the at least two types of signals/channels is indicated by RRC signaling or MAC CE signaling.

33. A computer-readable storage medium, wherein the readable storage medium stores a computer program or instructions; and when the computer program or the instructions are executed by a communication apparatus, the method according to any one of claims 1 to 8 or the method according to any one of claims 9 to 16 is implemented.

34. A communication system, comprising a terminal device and a network device, wherein the terminal device is configured to perform the method according to any one of claims 1 to 8, and the network device is configured to perform the method according to any one of claims 9 to 16.

35. A chip, wherein the chip is coupled to a memory, and the chip reads a computer program stored in the memory, to perform the method according to any one of claims 1 to 8 or the method according to any one of claims 9 to 16.

36. A computer program product, comprising a computer program or instructions, wherein when the computer program or the instructions are executed by a computer, the computer is enabled to implement the method according to any one of claims 1 to 8 or the method according to any one of claims 9 to 16.

37. A communication apparatus, comprising a processor, wherein the processor is configured to execute a computer program or instructions stored in a memory, to enable the communication apparatus to perform the method according to any one of claims 1 to 8 or the method according to any one of claims 9 to 16.

38. The communication apparatus according to claim 37, further comprising the memory and/or a transceiver, wherein the transceiver is used by the communication apparatus to perform communication.

39. A communication apparatus, configured to perform the method according to any one of claims 1 to 16.
